# EUROPÄISCHE PATENTANMELDUNG

(11) **EP 4 306 913 A1**
(43) Veröffentlichungstag der Anmeldung: **17.01.2024**
(21) Anmeldenummer: 23183119.9
(22) Anmeldetag: 03.07.2023
(51) Int. Cl.: G01F 15/18, A47L 15/00, D06F 39/02, G01F 1/698, G01F 1/69, G01F 23/00, G01F 23/22

(54) **ANSCHLUSSVORRICHTUNG**

(30) Priorität: 14.07.2022 DE 102022117666; 13.10.2022 DE 102022126804
(71) Anmelder: Herbert Saier GmbH, 79194 Gundelfingen (DE)
(72) Erfinder: Saier, Michael, 79117 Freiburg/Kappel (DE)
(74) Vertreter: Roche, von Westernhagen & Ehresmann

(57) **Zusammenfassung**

Die Erfindung betrifft unter anderem eine Anschlussvorrichtung (10) zur Bewerkstelligung einer lösbaren, mechanischen, insbesondere fluiddichten Verbindung einer Dosiereinrichtung (16) mit einem Kopfbereich (32) eines ein zu dosierendes Medium (12) aufweisenden Behältnisses (11), das insbesondere nach Art eines Überkopfgebindes (29) ausgebildet ist, und das insbesondere von einem flexiblen Beutel (30) bereitgestellt ist, wobei die Anschlussvorrichtung (10) einen Aufnahmeabschnitt (13) zur Aufnahme des Mediums (12) umfasst, der im verbundenen Zustand von Behältnis (11) und Anschlussvorrichtung (10) unmittelbar stromabwärts des Kopfbereiches (32) des Behältnisses (11) oder unmittelbar benachbart des Kopfbereiches (32) des Behältnisses (11) angeordnet ist. Eine Besonderheit der Erfindung besteht unter anderem darin, dass an der Anschlussvorrichtung (10) wenigstens ein Heizelement (21) und wenigstens ein mit einer Messeinrichtung (23) verbindbarer oder verbundener Temperatursensor (22) angeordnet ist, wobei mittels der Messeinrichtung (23) unter Zuhilfenahme eines von dem Temperatursensor (22) ausgegebenen Messwertes
i) eine Information über eine vorgenommene Förderung des Mediums (12) durch die Anschlussvorrichtung (10) hindurch ermittelbar ist und/ oder
ii) eine Information über eine Präsenz an Medium (12) in dem Aufnahmeabschnitt (32) ermittelbar ist.

## Beschreibung

Die Erfindung bezieht sich zunächst auf eine Anschlussvorrichtung nach dem Oberbegriff des Anspruches 1.

Die Anmelder entwickeln und vertreiben über die mit ihnen verbundenen Unternehmen Herbert Saier GmbH und Saier Dosiertechnik GmbH Anschlussvorrichtungen der gattungsgemäßen Art für Dosiereinrichtungen seit vielen Jahrzehnten. Bezüglich Dosiereinrichtungen des Standes der Technik wird beispielsweise verwiesen auf die Druckschriften DE 10 2016 102 829 A1, DE 10 2017 114 767 A1, DE 10 2017 103 168 A1, DE10 2016 125 928 A1, DE 10 2017 114 665 A1, DE 10 2018 113 644 A1, DE 10 2011 119 021 A1, DE 10 2011 122 921 A1, DE 10 2012 012 913 A1, DE 10 2014 002 560 A1, DE 10 2014 010 126 A1, EP 2 966 299 A1, DE 10 2015 110 862 A1, EP 3 115 498 A1, DE 10 2015 107 105 A1, EP 3 091 114 A1 und DE 10 2015 107 976 A1, die sämtlich auf die Anmelder zurückgehen.

Anschlussvorrichtungen der bekannten Art dienen als eine Art Andockstelle für besondere Gebinde oder Behältnisse. Zum einen sind sogenannte Überkopfgebinde bekannt, die aus einem schlauchartigen, flexiblen Beutel bestehen, der mit seinem Kopfbereich kopfüber in eine Halterung, zum Beispiel in eine trichterartig ausgebildete Halterung, der Dosiereinrichtung eingesetzt werden kann. Die Anschlussvorrichtung des Standes der Technik, dient zur Bewerkstelligung eines mechanischen, insbesondere eines fluiddichten Anschlusses. Im montierten Zustand ist das Gebinde über Kopf angeordnet. Der Kopfbereich des Gebindes, der zum Beispiel ein Schraubgewinde aufweisen kann, ist nach unten hin orientiert, so dass auf einfache Weise eine vollständige Entleerung des Gebindes erreicht werden kann.

Des Weiteren sind im Stand der Technik Anschlussvorrichtungen der gattungsgemäßen Art bekannt geworden für schlauchartige Gebinde, oder Gebinde nach Art eines Beutels in denen ein Saugrohr fest angeordnet ist.

Die Anschlussvorrichtung des Standes der Technik umgreift auch hier Abschnitte am Kopfbereich des Gebindes und verbindet die Dosiereinrichtung mit einem Kopfabschnitt des fest in dem Behältnis angeordneten Saugrohres.

Die Dosiereinrichtung kann unter Zuhilfenahme einer Pumpe ein flüssiges Medium bei Bedarf und in der gewünschten Menge aus dem Behältnis heraus saugen, und einem Zielbehältnis, z. B. einer Waschmaschine oder einer Geschirrspülmaschine, zukommen lassen.

Es ist eine druckschriftliche nicht belegbare Anschlussvorrichtung des Standes der Technik bekannt geworden, mit der ein Leerstand im Gebinde festgestellt werden soll. Hier ist im Bereich der Anschlussvorrichtung ein Drucksensor angeordnet. Bei vollständiger Entleerung des Gebindes soll der Drucksensor ansprechen und der Dosiereinrichtung einen Leerstand im Gebinde signalisieren. Dieser Drucksensor funktioniert nicht zufriedenstellend und spricht häufig zu spät an.

Ausgehend von der einer eingangs beschriebenen, druckschriftlich nicht belegbaren Anschlussvorrichtung mit den Merkmalen des Oberbegriffes des Anspruches 1 besteht die Aufgabe der Erfindung darin, eine Anschlussvorrichtung anzugeben, die eine verbesserte Durchführung von Dosierprozessen ermöglicht.

Die Erfindung löst diese Aufgabe mit den Merkmalen des Anspruches 1.

Das Prinzip der Erfindung wird wie folgt erläutert:
Eine Anschlussvorrichtung der erfindungsgemäßen Art dient zur Bewerkstelligung einer Verbindung einer Dosiereinrichtung mit einem Kopfbereich eines Behältnisses. Die Dosiereinrichtung kann insbesondere unter Zuhilfenahme eines Schlauches oder einer Schlauchleitung mit dem Behältnis verbunden werden. Das Behältnis kann insbesondere von einem Beutel, insbesondere einem flexiblen Beutel, der auch als Schlauchbeutel bezeichnet wird, bereitgestellt werden.

Das Behältnis weist einen Kopfbereich auf, der insbesondere stabile oder fest, oder unflexibel oder weniger flexibel ausgebildete Werkstoffbereiche umfasst.

Beispielsweise kann der Kopfbereich des Behältnisses ein Schraubgebinde bereitstellen, das mit einem Gewinde einer Anschlussvorrichtung kooperieren kann.

Der Kopfbereich des Behältnisses kann mit einer Membran verschlossen sein. Die Membran kann vor einer Bewerkstelligung oder im Zuge der Bewerkstelligung der Verbindung des Kopfbereiches mit der Anschlussvorrichtung geöffnet werden.

Bei einer Variante der Erfindung kann das Behältnis mit dem Kopfabschnitt nach oben orientiert geöffnet werden und mit der Anschlussvorrichtung verbunden werden.

Erst nachfolgend kann im Betrieb der Dosiervorrichtung das Behältnis kopfüber, also nach unten hin gerichtet orientiert werden, so dass eine Restentleerung des Behältnisses auf sichere Weise gewährleistet werden kann.

Bei einer anderen Variante der Erfindung kann die Membran des Behältnisses bei Bewerkstelligung der Verbindung mit der Anschlussvorrichtung verletzt, zum Beispiel durchstochen werden. Hierzu kann zum Beispiel ein Dorn oder ein anderer, die Membran öffnender Körper, diese durchstechen oder verletzen und einen Flüssigkeitsdurchtritt durch die Membran ermöglichen. Dabei kann vorgesehen sein, dass im Zuge einer Bewerkstelligung einer Verbindung zwischen Anschlussvorrichtung und Kopfbereich des Behältnisses automatisch eine Verletzung der Membran erreicht wird.

In einer weiteren Variante der Erfindung kann die Anschlussvorrichtung eine Ventilanordnung umfassen, die einen Fluiddurchtritt durch einen Aufnahmeabschnitt der Anschlussvorrichtung zulassen oder sperren kann. Die Ventiländerung kann beispielsweise manuell betätigt werden, sodass eine Bedienperson entscheiden kann, ob ein Fluiddurchtritt zugelassen sein soll, oder verhindert sein soll. Von der Erfindung ist auch umfasst, wenn ein solches Ventil automatisch im Zuge der Bewerkstelligung einer Verbindung zwischen Kopfbereich des Gebindes und der Anschlussvorrichtung geöffnet und bei einer Lösung dieser Verbindung wieder geschlossen wird. Auf diese Weise kann ein unbeabsichtigtes Austreten von Medium aus dem Gebinde verhindert werden.

Angemerkt sei, dass die in dem Behältnis befindlichen Medien zum Beispiel auch Substanzen aufweisen können, die nicht in Kontakt mit der Haut, den Augen oder anderen Körperteilen der Bedienperson treten dürfen, da ansonsten gesundheitliche Beeinträchtigungen zu befürchten sind.

Bei einer weiteren Variante der Erfindung kann das Behältnis von einem flexiblen Schlauch oder Sack gebildet sein, in dem ein Saugrohr fest angeordnet ist. Hier erfolgt infolge einer Bewerkstelligung einer Verbindung der Anschlussvorrichtung mit dem Kopfabschnitt des Behältnisses eine Verbindung zwischen der Dosiereinrichtung und dem Kopfabschnitt dieses Saugrohres. Im Betrieb kann das Behältnis derartig orientiert werden, dass der Kopfabschnitt oben ist. Der Fußbereich des Saugrohres ist im Betrieb der Dosiereinrichtung also an den Boden des Schlauches oder des Beutels herangesetzt, um eine Restentleerung zu gewährleisten.

Die erfindungsgemäße Anschlussvorrichtung dient insbesondere zur Bereitstellung einer lösbaren Verbindung. Hierzu kann an der Anschlussvorrichtung ein Kupplungsabschnitt angeordnet sein. Der Kupplungsabschnitt kann zum Beispiel ein Gewinde, insbesondere ein Innengewinde, an der Anschlussvorrichtung umfassen. Dieses Innengewinde an der Anschlussvorrichtung kann zum Beispiel mit einem Außengewinde an dem Kopfbereich des Behältnisses kooperieren.

Von der Erfindung ist auch umfasst, wenn der Kupplungsabschnitt eine Schnappverbindung, zum Beispiel eine Ringschnappverbindung, umfasst, die eine lösbare Befestigung des Kopfbereiches des Behältnisses an der Anschlussvorrichtung ermöglicht.

Die erfindungsgemäße Anschlussvorrichtung umfasst insbesondere einen Kupplungsabschnitt, der Flächen, Wandungen oder Wandbereiche des Kopfabschnittes des Behältnisses ausschließlich außenseitig umgreift. Insbesondere umfasst die erfindungsgemäße Anschlussvorrichtung, anders als eine Sauglanze, die in ein Behältnis eingesteckt wird, keine Elemente - mit Ausnahme eines Dorns, um die Membran zu durchstechen - die im verbundenen Zustand in das Innere des Behältnisses hineinragen. Der Anschluss der Anschlussvorrichtung an den Kopfbereich des Gewindes wird im Übrigen durch Andocken oder Heransetzen von Kontaktflächen der Anschlussvorrichtung an entsprechende Gegenflächen an der Außenumfangsfläche des Kopfbereiches des Behältnisses bewerkstelligt.

Die Anschlussvorrichtung kann ortsfest angeordnet sein. Eine Halterung kann Bestandteil der Anschlussvorrichtung sein oder der Anschlussvorrichtung zugeordnet sein. Die Halterung nimmt das Behältnis auf. Die Halterung kann zum Beispiel trichterförmig ausgebildet sein.

Die Halterung kann ortsfest, insbesondere fest relativ zu einer Wand eines Gebäuderaumes angeordnet sein, oder insbesondere fest relativ zu der Dosiereinrichtung angeordnet sein.

Die Erfindung dient insbesondere zur Erzielung einer fluiddichten Verbindung der Dosiereinrichtung mit dem Kopfbereich des Behältnisses.

Gemäß der Erfindung ist unmittelbar stromabwärts des Kopfbereiches des Behältnisses oder unmittelbar benachbart des Kopfbereiches des Behältnisses ein Aufnahmeabschnitt angeordnet. Der Begriff stromabwärts oder stromaufwärts bezieht sich auf die Strömungsrichtung des Fluides bei bestimmungsgemäßem Gebrauch der Anschlussvorrichtung. Der Aufnahmeabschnitt dient zur Aufnahme des Mediums. Von dort erfolgt eine Weiterleitung des Mediums an die Dosiereinrichtung. Der Aufnahmeabschnitt kann insbesondere unmittelbar mit einem Verbindungsschlauch verbunden sein. In den Aufnahmeabschnitt kann sich, für den Fall, dass die Dosiereinrichtung nicht betrieben wird, stehendes Medium befinden. Der Aufnahmeabschnitt wird bei Förderung des Mediums von dem Medium durchströmt.

Gemäß der Besonderheit der Erfindung sind an der Anschlussvorrichtung wenigstens ein Heizelement und wenigstens ein Temperatursensor angeordnet. Das Heizelement kann beheizt werden oder erwärmt werden. Der Temperatursensor kann eine Temperatur feststellen. Insbesondere ist der Temperatursensor mit einer Messvorrichtung verbunden oder verbindbar. Die Messeinrichtung kann Bestandteil der Anschlussvorrichtung sein, oder Bestandteil der Dosiereinrichtung sein. Das Heizelement ist zum Beispiel mit einer Heizungssteuerung verbunden oder mit einer Stromquelle oder Spannungsquelle, die die erforderliche Betriebsspannung bereitstellt.

Der Temperatursensor weist eine Beaufschlagungsfläche auf, die unmittelbar in Kontakt mit dem Medium steht, wenn Medium in der Anschlussvorrichtung, insbesondere im Aufnahmeabschnitt, ansteht.

Das Heizelement und der Temperatursensor können eine Baueinheit ausbilden. Die Baueinheit kann feststellen, ob sich durch die Anschlussvorrichtung oder den Aufnahmeabschnitt hindurch Medium bewegt, also gefördert wird. Alternativ oder zusätzlich kann die Baueinheit feststellen, ob Medium in der Anschlussvorrichtung oder in dem Aufnahmeabschnitt präsent ist.

Hierdurch wird die Möglichkeit bereitgestellt, frühestmöglich bei Erreichen eines Leerstandes an Medium im Behältnis der Dosiereinrichtung eine Information zukommen zu lassen, dass das Behältnis geleert ist. Damit kann zum Beispiel die Dosiereinrichtung einen Dosierprozess so früh wie möglich abbrechen oder unterbrechen, oder ein Warnsignal ausgeben oder eine Nachbestellung an Medium veranlassen oder eine Leermeldung anzeigen.

Gemäß einer ersten Variante der Erfindung ist eine Information über eine vorgenommene Förderung des Mediums durch die Anschlussvorrichtung hindurch ermittelbar. Das Heizelement und der Temperatursensor sind bei dieser Variante als Bestandteil einer Durchflussmesseinrichtung, eines sogenannten Flowmeters, ausgebildet. Die Messeinrichtung kann von dem Temperatursensor einen Messwert aufnehmen und hieraus, mittelbar oder unmittelbar, Informationen über eine vorgenommene Förderung an Medium durch die Anschlussvorrichtung hindurch ermitteln.

Gemäß der ersten Variante der Erfindung kann infolge einer durch Betrieb der Pumpe veranlassten Förderung des Mediums durch die Anschlussvorrichtung hindurch festgestellt werden, dass mit dem Medientransport ein Wärmetransport einhergeht. Dieser nimmt einen Einfluss auf die durch den Temperatursensor zu messende Temperatur.

Gemäß einer zweiten Variante der Erfindung kann aus dem von dem Temperatursensor ausgegebenen Messwert eine Information über eine Präsenz an Medium in dem Aufnahmeabschnitt ermittelt werden. Hierbei ist vorgesehen, dass das Heizelement in Kombination mit dem Temperatursensor einen Messwert bereitstellen kann, der einen Schluss zulässt, ob ein bestimmter Füllstand an Medium in dem Aufnahmeabschnitt besteht.

Gemäß der zweiten Variante der Erfindung kann der Temperatursensor feststellen, ob insbesondere flüssiges Medium oder Luft anliegt. Dies hängt mit unterschiedlichen Wärmekapazitäten einer Flüssigkeit einerseits und Luft andererseits zusammen. Diese unterschiedlichen Wärmekapazitäten des Umgebungsbereichs des Temperatursensors bzw. eines Umgebungsbereiches des Heizelementes erlauben also zum Beispiel einen Rückschluss auf einen Medientransport und/ oder auf die Art des anstehenden Mediums (Flüssigkeit/ Luft) und damit die Ermittlung einer Füllstandsinformation oder einer Leerstandsinformation.

Als Information über eine Präsenz an Medium in den Aufnahmeabschnitt wird im Sinne der Erfindung beispielsweise eine Information verstanden, dass das Behältnis vollständig entleert ist. Als Information über eine Präsenz an Medium in den Aufnahmeabschnitt gemäß der Erfindung wird aber auch eine Information verstanden, die darüber Auskunft gibt, dass der Inhalt des Behältnisses bald zur Neige geht.

Gemäß der zweiten Variante der Erfindung ist mit der Messeinrichtung zumindest eine Information über eine Präsenz an Medium in den Aufnahmeabschnitt ermittelbar. Bei Varianten der Erfindung können mittels der Messeinrichtung auch noch zusätzliche Informationen, beispielsweise über die Art des Mediums, ermittelbar sein.

Gemäß der Erfindung ist die Anschlussvorrichtung insbesondere dazu vorgesehen, eine Flüssigkeit aus einem Gebinde zu einer Dosiereinrichtung zu fördern. Die erfindungsgemäße Anschlussvorrichtung kann aber auch dazu dienen, unmittelbar an eine Pumpe oder eine andere Fördereinrichtung angeschlossen zu werden, die im Bereich der Anschlussvorrichtung einen Saugdruck erzeugt, um Flüssigkeit durch die Anschlussvorrichtung aus dem Gebinde herauszusaugen.

Die Anschlussvorrichtung ist gemäß der Erfindung vorteilhaft dazu ausgebildet, unmittelbar mit einer Dosiereinrichtung, z. B. mit einem Eingang einer Dosiereinrichtung, insbesondere mit einer Schlauchleitung der Dosiereinrichtung verbunden zu werden. Bei einer Variante der Erfindung kann die Anschlussvorrichtung auch unmittelbar mit einer Pumpe oder mit einem Einlass einer anderen Fördereinrichtung verbunden werden.

Gemäß einer vorteilhaften Variante der Erfindung umfasst die Anschlussvorrichtung wenigstens einen elektrischen Leiter, insbesondere zur Verbindung mit der Dosiereinrichtung. Der elektrische Leiter verläuft zumindest teilweise innerhalb der Anschlussvorrichtung. Der elektrische Leiter verbindet das Heizelement und/oder den Temperatursensor zum Beispiel mit einem fern der Anschlussvorrichtung angeordneten elektrischen Anschluss. Der elektrische Leiter erstreckt sich insoweit bis nahe an die Anschlussvorrichtung heran. Das Ende des elektrischen Leiters, das distanziert von der Anschlussvorrichtung angeordnet sein kann, kann insbesondere als Steckverbinder ausgebildet sein, und mit einem Gegensteckverbinder kooperieren.

Vorteilhafterweise ist nicht nur ein elektrischer Leiter innerhalb der Anschlussvorrichtung untergebracht, sondern es sind mehrere elektrische Leiter innerhalb der Anschlussvorrichtung untergebracht.

Bei einer vorteilhaften Variante der Erfindung werden das Heizelement und der Temperatursensor mit Versorgungspannung versorgt, so dass einer bzw. mehrere Leiter erforderlich sind oder vorteilhaft sind. Darüber hinaus kann wenigstens ein elektrischer Leiter oder ein Paar elektrischer Leiter eine Signalleitung bereitstellen, wobei über die Signalleitung eine Information, insbesondere eine Information über eine Medienpräsenz, insbesondere an die Steuerung der Dosiereinrichtung übermittelbar ist.

Gemäß einer weiteren vorteilhaften Variante der Erfindung ist an der Anschlussvorrichtung eine Leiterplatte mit elektronischen Bauelementen angeordnet. Insbesondere sind auf der Leiterplatte Bauelemente angeordnet, die eine Auswertung einer durchgeführten Messung ermöglichen. Damit wird es möglich, die Auswerteelektronik oder deren Bestandteile vollständig oder teilweise an der Anschlussvorrichtung anzuordnen.

Gemäß einer weiteren vorteilhaften Variante der Erfindung sind dem Heizelement und/oder dem Temperatursensor elektrische Steckverbinder zugeordnet. Hierdurch wird einerseits die Möglichkeit bereitgestellt, die Messeinrichtung mit der erforderlichen Versorgungsspannung oder Betriebsspannung auf einfache Weise zu versorgen. Zum anderen können über die Steckverbinder an der Anschlussvorrichtung auf einfache Weise Datenleitungen angeschlossen werden, um die Informationen an eine Steuerung, z. B. an eine Steuerung einer Dosiereinrichtung, zu übermitteln.

Schließlich kann die Anschlussvorrichtung auch eine Einrichtung aufweisen, mit der das zur Neigegehen der Flüssigkeit oder ein erreichter Leerstand des Gebindes signalisiert wird. Eine Signalisierung kann beispielsweise als optisches oder akustisches oder datentechnisches Informationssignal vorgesehen sein.

Das Prinzip der Erfindung besteht im Wesentlichen darin, der Anschlussvorrichtung wenigstens ein Heizelement und wenigstens einen Temperatursensor zuzuordnen. Das Heizelement kann das in der Anschlussvorrichtung anstehende Medium mit Wärmeenergie beaufschlagen, und der wenigstens eine Temperatursensor kann - distanziert von dem Heizelement oder benachbart des Heizelementes angeordnet sein und - die dort anliegende Temperatur messen.

Für den Fall, dass die Pumpe nicht angetrieben ist, und das Medium, z. B. ein Reinigungsmittel, demnach in der Anschlussvorrichtung steht und keine Mediumförderung vorgenommen wird, kann in Abhängigkeit von der Ansteuerung des Heizelementes an dem Temperatursensor ein bestimmter Temperaturmesswert festgestellt oder gemessen werden.

Die Ansteuerung des Heizelementes kann insbesondere kontinuierlich oder getaktet oder auf Abruf oder bei Bedarf oder nach einem vorgegebenen Prinzip oder Schema erfolgen.

Wenn die Pumpe der Dosiereinrichtung angesprochen wird und Medium durch die Anschlussvorrichtung gefördert wird, und mit der Förderung des Mediums ein Wärmetransport erfolgt, ändert sich die an dem Temperatursensor anliegende und messbare Temperatur. Eine Messeinrichtung kann diese Änderung des Temperaturmesswertes verarbeiten und auswerten und hieraus eine Information über eine vorgenommene Förderung des Mediums durch die Anschlussvorrichtung hindurch ermitteln. Diese Information kann von der Messeinrichtung an die Steuereinheit der Dosiereinrichtung übermittelt werden. Infolge der Übermittlung der Information an die Steuereinheit kann die Steuereinheit unterschiedliche Bearbeitungsschritte durchführen.

Beispielsweise kann aus der von der Messeinrichtung übermittelten Information von der Steuereinheit ein Bezug zu der Art des geförderten Mediums oder ein Bezug zu der Fördermenge herausgearbeitet werden.

Diese Information kann von der Steuereinheit z. B. dazu verwendet werden, eine Kontrolle durchzuführen, ob das richtige Medium gefördert worden ist, oder eine Bestimmung vorzunehmen, welche Fördermenge an Medium gefördert worden ist, oder eine Kontrolle durchführen, ob die korrekte Fördermenge von der Pumpe gefördert worden ist.

Bei einer Ausgestaltung der Erfindung ist vorgesehen, dass wenigstens ein Heizelement und wenigstens zwei Temperatursensoren vorgesehen sind. Die Temperatursensoren sind insbesondere symmetrisch zu dem Heizelement angeordnet, wobei ein erster Temperatursensor stromabwärts und ein zweiter Temperatursensor stromaufwärts des Heizelementes angeordnet ist. Bei in der Anschlussvorrichtung stehendem, nicht bewegtem Medium verteilt sich die von dem Heizelement in das Medium eingebrachte Wärmeenergie aufgrund der symmetrischen Anordnung der Temperatursensoren, eine symmetrische Bauform der Fluidleitung in der Anschlussvorrichtung und der beteiligten Komponenten vorausgesetzt, gleichmäßig, so dass an beiden Temperatursensoren die gleiche oder im Wesentlichen die gleiche Temperatur gemessen wird. Bei dieser Anordnung besteht eine besonders einfache Möglichkeit einer Differenzmessung, so dass die erhaltenen Temperaturmesswerte, oder jedenfalls Messwerte, die mit der Temperatur im Zusammenhang stehen, z. B. Spannungen oder Ströme, voneinander subtrahiert werden können.

Eine solche Differenzmessung ist an sich im Stand der Technik in anderen Anwendungsbereichen bekannt und bietet besonders einfache Möglichkeiten einer Auswertung.

Solange das Medium steht, mithin die Pumpe nicht angesprochen wird, und keine Mediumförderung durch die Anschlussvorrichtung hindurch stattfindet, ermittelt eine Differenzmessung einen Wert von Null oder nahezu von Null, da die beiden, von den Temperatursensoren abgegebenen Werte einander entsprechen oder einander im Wesentlichen entsprechen.

Sobald sich aber das Medium durch die Anschlussvorrichtung hindurch bewegt, aufgrund des Ansprechens der Pumpe, und aufgrund der Mediumförderung durch die Anschlussvorrichtung hindurch, misst der stromabwärts des Heizelementes angeordnete Temperatursensor zwangsläufig, aufgrund des mit dem Fluidstrom einhergehenden Wärmetransports, eine andere Temperatur als der stromaufwärts des Heizelementes angeordnete Temperatursensor.

Die Differenzmessung liefert sodann aussagekräftige, von Null verschiedene Werte.

Unter Anwendung eines analogen Mess- und Auswerteverfahrens kann eine Information über einen Fluidtransport auch erlangt werden, wenn nur ein einziger Temperatursensor vorgesehen ist. Auch hier kann in Folge eines Fluidstroms ein geänderter Messwert detektiert werden, bezogen auf eine Situation, in der das Medium in der Anschlussvorrichtung steht.

Ein besonderer Vorteil der erfindungsgemäßen Anschlussvorrichtung besteht darin, dass die vorgeschlagene Messanordnung keinerlei bewegliche Teile verwendet.

Aus dem Stand der Technik sind Flowmeter - allerdings nicht für Anschlussvorrichtungen - bekannt, bei denen Flügelradzähler oder Ovalradzähler eingesetzt werden, um Fluidströme zu messen. Allerdings sind hier bewegliche Teile vorhanden, die insbesondere bei Verwendung unterschiedlicher Medien mit unterschiedlichen Viskositäten unpräzise Messwerte liefern und darüber hinaus hohen mechanischen Beanspruchungen ausgesetzt sind, so dass häufig Ausfälle zu verzeichnen sind. Die erfindungsgemäße Anschlussvorrichtung ist aufgrund einer Anordnung von Heizelement und Temperatursensor völlig wartungsfrei.

Das erfindungsgemäße Messprinzip bietet zudem die Möglichkeit extrem kurzer Ansprechzeiten. Die Erfindung erkennt, dass, insbesondere bei einem Betrieb einer Dosiereinrichtung, die eine Schlauchpumpe einsetzt, und bei der auch nur geringe Dosiermengen gefördert werden, sehr exakte und schnelle Messungen und daraus resultierend sehr exakte Bestimmungen von Fördermengen erreichbar sind. Auch ermöglicht die erfindungsgemäße Anschlussvorrichtung eine sehr exakte und sichere Bestimmung einer Medienart.

Hierzu kann insbesondere vorgesehen sein, dass die Messeinrichtung oder eine mit dieser kooperierende oder eine dieser nachgeschaltete Rechnereinheit, oder alternativ auch die Steuereinheit, eine Verarbeitung der erhaltenen Messwerte vornimmt, und aus der Signalform, z. B. aus der Signallänge, oder aus der Signalamplitude, oder aus dem Verhalten von Signalanstiegsflanken, oder von Signalabfallflanken, oder durch Frequenzanalysen oder Spektralanalysen, oder durch Prüfung oder Bestimmung von Periodizitäten, oder durch Prüfung von Signalmustern, von Verzögerungszeiten, von Phasenverzögerungen etc., sehr genaue Bestimmungen von Fördermengen, insbesondere auch für unterschiedliche Medien und unterschiedlichen Viskositäten sowie sehr genaue Bestimmungen unterschiedlicher Medienarten erreichbar sind.

Hierzu kann vorteilhafterweise der Steuereinheit der Dosiereinrichtung ein Speicher zugeordnet sein, in dem Werte für unterschiedliche Medien oder Werte für unterschiedliche Fördermengen oder für unterschiedliche Förderleistungen der Pumpe abgespeichert sind. Die Werte können z. B. Werte von unterschiedlichen Signalmustern, Signalformen, Signalarten, Signalanstiegsflanken, oder von Signalabfallflanken, Periodizitäten, Verzögerungszeiten, von Phasenverzögerungen, Signalamplituden und anderer Signaleigenschaften umfassen.

Die Steuereinheit kann unter Rückgriff auf den Speicher eine Beurteilung durchführen, z. B. einen Vergleich zwischen dem gemessenen Wert und dem im Speicher abgelegten Wert vornehmen, und z. B. aufgrund dieser Beurteilung, z. B. aufgrund dieses Vergleiches, z. B. eine Bestimmung oder eine Kontrolle durchführen, welche Art von Medium gefördert worden ist und/oder welche Fördermenge eines bestimmten Mediums oder einer Medienart oder Mediumklasse gefördert worden ist.

Die erfindungsgemäße Anschlussvorrichtung wird im Zusammenhang mit einer Dosiereinrichtung eingesetzt, die der Dosierung und Zuführung von Medien über eine Fluidleitung zu wenigstens einem Zielgerät dient.

Das Zielgerät kann beispielsweise von einer gewerblichen, textilen Waschmaschine oder von einer gewerblichen Geschirrspülmaschine bereitgestellt sein. Es kommen aber auch andere Zielgeräte in Betracht, denen regelmäßig oder unregelmäßig gleiche oder unterschiedliche, gegebenenfalls aufeinanderfolgende Medien, zugeführt werden müssen.

Als ein Zielgerät im Sinne der vorliegenden Patentanmeldung wird auch ein Gerät oder eine Anlage zur Bereitstellung und/oder zur Herstellung und/oder zur Abfüllung von Reinigungslösungen oder Desinfektionslösungen verstanden, wie sie zum Beispiel ihrer Art nach in der eingangs erwähnten DE 10 2016 102 829 A1 der Anmelder beschrieben sind.

Von der Erfindung sind Anschlussvorrichtungen für Dosiereinrichtungen umfasst, bei denen die Dosiereinrichtung gesondert von dem Zielgerät angeordnet ist, sowie Anschlussvorrichtungen, bei denen die Dosiereinrichtung integral mit dem Zielgerät ausgebildet ist.

Die Dosiereinrichtung ist eingangsseitig mit wenigstens einem Behältnis verbunden, das mit einem Medium befüllt ist. Das Behältnis umfasst einen Kopfbereich, der mit der Anschlussvorrichtung verbunden ist.

Die Dosiereinrichtung kann eingangsseitig aber auch mit mehreren Behältnissen verbunden sein, die mit dem gleichen Medium oder mit unterschiedlichen Medien befüllt sind, und die jeweils über eine erfindungsgemäße Anschlussvorrichtung angeschlossen sind. Bei einer Ausführungsform der Erfindung dient die erfindungsgemäße Anschlussvorrichtung zum sukzessiven Zuführen unterschiedlicher Medien zu einem Zielgerät. Es wird hierzu beispielsweise verwiesen auf die EP 2 783 142 A2 der Anmelder, deren Inhalt hiermit in den Inhalt der vorliegenden Patentanmeldung mit eingeschlossen wird.

Bei einer Ausführungsform der Erfindung sind an die Anschlussvorrichtung auch mehrere Behältnisse anschließbar. Dabei kann gemäß einer ersten Variante vorgesehen sein, dass die Anschlussvorrichtung einen Aufnahmeabschnitt umfasst, der zur Aufnahme der Medien der mehreren Behältnisse dient. Bei einer weiteren Variante der Erfindung kann die Anschlussvorrichtung auch mehrere Aufnahmeabschnitte zur Aufnahme unterschiedlicher Medien von unterschiedlichen Behältnissen umfassen.

Die Dosiereinrichtung kann mit einer sogenannten Mischverteileinrichtung ausgestattet sein, die in der zuvor genannten Patentanmeldung beschrieben und offenbart ist. Eine solche Mischverteileinrichtung kann ein Stellglied aufweisen, das von der Steuereinheit ansprechbar ist und das unterschiedliche Kommunikationswege schaltet, so dass jeweils ein bestimmtes der mehreren Behältnisse mit dem Zielgerät verbindbar ist und auf diese Weise sukzessive unterschiedliche Medien dem Zielgerät zuführbar sind.

Wenigstens eines der Medien kann als Spülmittel ausgebildet sein, so dass jedes Mal nach Förderung eines Mediums ein Spülmedium gefördert werden kann, um die Leitungswege zu spülen.

Ein Medium im Sinne der vorliegenden Patentanmeldung ist ein flüssiges, z. B. hochkonzentriertes Mittel, das z. B. beim Waschen oder Reinigen oder beim Desinfizieren von Gegenständen oder Textilien einsetzbar ist, z. B. ein Bestandteil eines Waschmittels, oder eine Chemikalie, die z. B. im Rahmen eines Wasch- oder Reinigungsprozesses oder Desinfektionsprozesses benötigt wird. Als Medium kommen jegliche Materialien in Betracht, wie sie z. B. in der EP2 783 142 A2 oder wie sie in einer der anderen, in Bezug genommenen Druckschriften beschrieben sind.

Die Dosiereinrichtung weist eine Steuereinheit auf. Es kann sich hierbei um eine Einrichtung handeln, die eine Rechnereinheit, z. B. einen Mikroprozessor, aufweist. Die Steuereinheit kann eine oder mehrere elektronische Komponenten aufweisen. Sie kann zentral oder dezentral organisiert sein.

Die Steuereinheit kann z. B. durch Aufforderung durch ein Zielgerät, z. B. nach Betätigung eines Programmwahlschalters an einem Zielgerät und Auswahl eines Wasch- oder Reinigungsprogramms, veranlassen, dass eine Pumpe angesprochen wird. Die Pumpe kann insbesondere eine Schlauchpumpe sein.

Durch Ansprechen der Pumpe kann eine vorbestimmte Menge an Medium aus dem Behältnis entnommen und zu dem Zielgerät hin gefördert werden.

Von der Erfindung sind auch Dosiereinrichtungen umfasst, die ausgangsseitig an mehrere Zielgeräte angeschlossen sein. Dabei kann insbesondere eine zweite Mischverteileinrichtung vorgesehen sein, die ein Stellglied umfasst, das die Kommunikationswege entsprechend schaltet.

Insbesondere kann während einer Durchführung eines Reinigungsprozesses an einem Zielgerät, zum Beispiel eines Waschprozesses in einer Waschmaschine, vorgesehen sein, dass das Zielgerät, zum Beispiel die Waschmaschine, zu unterschiedlichen Zeitpunkten im Rahmen des Waschprogramms von der Dosiereinrichtung unterschiedliche Medien in unterschiedlichen Mengen anfordert.

Die Dosiereinrichtung kann, für den Fall, dass eingangsseitig unterschiedliche Behältnisse angeschlossen sind, das Stellglied ansprechen, so dass der richtige Kommunikationsweg zu dem richtigen Behälter hergestellt wird, und sodann die Pumpe veranlassen, für eine vorbestimmte Zeitdauer oder eine vorbestimmte Zahl von Umdrehungen, eine vorbestimmte Menge an Medium zu dem Zielgerät zu fördern.

Mit dem erfindungsgemäß vorgesehenen Heizelement und dem Temperatursensor kann die Steuereinheit von der Messeinrichtung eine Information über eine vorgenommene Förderung des Mediums durch die - Anschlussvorrichtung hindurch erlangen. Die Steuereinheit kann diese Information beispielsweise dazu verwenden, um zu überprüfen, ob das richtige Medium oder die richtige Medienart oder -klasse gefördert worden ist.

Die Steuereinheit kann die Information auch oder alternativ dazu verwenden, zu überprüfen, ob die richtige Fördermenge gefördert worden ist.

Die Erfindung ermöglicht auch eine Überprüfung dahingehend, ob an einem Zielgerät ein bestimmtes gefördertes Volumen an Medium angekommen ist. Ein solcher Prozess, der auch als POD (proof of delivery) bezeichnet wird, kann vorsehen, dass eingangsseitig oder jedenfalls stromaufwärts eines Zielgerätes, insbesondere eines jeden Zielgerätes, ein entsprechendes Heizelement und wenigstens ein Temperatursensor angeordnet ist, und eine Messeinrichtung, die entsprechende Informationen an die Steuereinheit übermittelt.

Alternativ und/oder zusätzlich kann auch eine Übermittlung dieser Information an ein Steuergerät des Zielgerätes erfolgen.

Bezüglich des Verständnisses der Erfindung und die Auslegung der verwendeten Begriffe wird verwiesen auf die weiteren Druckschriften der Anmelder, deren Inhalt hiermit in den Offenbarungsgehalt der vorliegenden Patentanmeldung mit eingeschlossen wird. Die technische Lehre gemäß der vorliegenden Patentanmeldung kann mit sämtlichen technischen Lehren der nachfolgend in Bezug genommenen Druckschriften kombiniert werden. Es handelt sich um die folgenden Druckschriften der Anmelder:
DE 10 2016 102 829 A1, DE 10 2017 114 767 A1, DE 10 2017 103 168 A1, DE 10 2016 125 928 A1, DE 10 2017 114 665 A1, DE 10 2018 113 644 A1, DE 10 2011 119 021 A1, DE 10 2011 122 921 A1, DE 10 2012 012 913 A1, DE 10 2014 002 560 A1, DE 10 2014 010 126 A1, EP 2 966 299 A1, DE 10 2015 110 862 A1, EP 3 115 498 A1, DE 10 2015 107 105 A1, EP 3 091 114 A1 und DE 10 2015 107 976 A1

Gemäß der Erfindung wird von der Messeinrichtung unter Zuhilfenahme eines von dem Temperatursensor ausgegebenen Messwertes eine Information über eine vorgenommene Förderung des Mediums durch die Anschlussvorrichtung hindurch ermittelt. Der von dem Temperatursensor ausgegebene Messwert kann beispielsweise unmittelbar eine gemessene Temperatur umfassen, oder eine Messgröße, die zu einer Temperatur in einem Zusammenhang steht, z. B. eine gemessene Spannung, einen gemessenen Strom oder einen gemessenen Widerstand. Entscheidend ist, dass der Messwert mit dem an dem Temperatursensor anliegenden Temperaturwert in irgendeiner Weise korreliert.

Von der Formulierung, wonach der Messwert von einem Temperatursensor ausgegeben wird, ist umfasst, dass der Messwert von einem Temperatursensor unmittelbar oder mittelbar abgefragt wird oder von der Messeinrichtung auf andere Weise von dem Temperatursensor unmittelbar oder mittelbar erhalten wird.

Gemäß der Erfindung sind wenigstens ein Heizelement und wenigstens ein Temperatursensor vorgesehen. Diese Formulierung schließt Ausführungsformen ein, bei denen der Temperatursensor integral mit dem Heizelement ausgebildet ist, oder das Heizelement zugleich auch den Temperatursensor darstellt oder umfasst.

So kann beispielsweise ein Heizelement vorgesehen sein, das mit einer Steuerung für das Heizelement kooperiert, die für eine konstante Temperatur oder eine Soll-Temperatur des Heizelements sorgt, wobei aus der Art der Ansteuerung des Heizelementes, z. B. um die Temperatur konstant zu halten, ermittelbar ist, ob sich Medium innerhalb der Anschlussvorrichtung bewegt, und welche Fluidmengen gerade gefördert werden. So kann beispielsweise eine Heizungssteuerung für das Heizelement derartig ausgebildet sein, dass diese im Sinne einer Konstanttemperatur regelt, dass das Heizelement immer eine konstante Temperatur von z. B. 35°C aufweist. Solange das Medium in der Anschlussvorrichtung steht und nicht gefördert wird, kann diese Temperatur, die höher als die Raumtemperatur ist, durch Zuführung von nur sehr wenig Heizenergie aufrechterhalten werden.

Wird die Pumpe angesprochen und das Medium durch die Anschlussvorrichtung gefördert, muss erheblich mehr Heizenergie ausgewandt werden, um das Heizelement auf dieser Solltemperatur zu halten. Die Art und das Maß der Ansteuerung des Heizelementes kann also indirekt ebenfalls ein Maß für die Fluidförderung und die Menge der Fluidförderung sein, so dass die Messung der Art der Ansteuerung des Heizelementes indirekt auch eine Ausbildung eines Temperatursensors im Sinne der Erfindung bereitstellt.

Gleichermaßen kann die Art und das Maß der Ansteuerung des Heizelementes indirekt auch ein Maß dafür sein, ob an dem Heizelement und an dem Temperatursensor flüssiges Medium ansteht oder Luft.

Gemäß einer weiteren Variante der Erfindung kann das Heizelement gemeinsam mit dem Temperatursensor beispielsweise auch von einem integrierten Bauelement bereitgestellt werden. Dieses kann zum Beispiel einen temperaturabhängigen Widerstand umfassen.

Insbesondere kann ein solches Bauelement von einem NTC (Negative Temperature Coefficient)-Bauelement oder von einem PTC (Positive Temperature Coefficient)-Bauelement bereitgestellt sein oder ein solches Bauelement umfassen.

Weiter vorteilhaft kann ein solches elektronisches Bauelement mit einer Konstantstromquelle kooperieren. Die über das Bauelement abfallende Spannung kann gemessen werden und stellt ein Maß für den temperaturabhängigen Widerstand dar. Dieser Messwert ist damit auch ein Maß für dessen aktuelle Temperatur. Die aktuelle Temperatur des elektronischen Bauelementes ist davon abhängig, ob das Medium, das das Bauelement umgibt, steht oder fließt, und hängt beispielsweise auch von der Wärmekapazität des jeweiligen Mediums ab.

Aus einem Wert der über das elektronische Bauelement abfallenden Spannung bei Versorgung über eine Konstantstromquelle kann daher eine Information über eine Förderung von Medium oder über eine Präsenz eines Mediums ermittelt werden.

Als Pumpe einer Dosiereinrichtung im Sinne der Erfindung wird jede geeignete Art von Pumpe, z. B. eine Schlauchpumpe, Membranpumpe oder Kreiselpumpe, angesehen. Eine Pumpe im Sinne der Erfindung ist insbesondere eine Einrichtung, mit der ein Fluid, insbesondere eine Flüssigkeit, gefördert werden kann.

Von der Erfindung sind auch Anschlussvorrichtungen für Dosiereinrichtungen mit Pumpen umfasst, die mit Saugprinzipien, z. B. nach dem Venturi-Prinzip, arbeiten. Hier wird z. B. durch Öffnen eines Ventils an einer Wasserleitung und z. B. durch Öffnen eines weiteren Ventils einer Medienleitung, die mit der Wasserleitung kommuniziert, in der Medienleitung zum Zweck einer Medienmitnahme ein Unterdruck erzeugt. Eine solche Pumpe bezeichnet man auch als Unterdruck-Pumpe, Saugpumpe, Venturi-Pumpe oder Venturidüse, Strahlpumpe oder Wasserstrahlpumpe.

Bezüglich der möglichen Anordnung und Ausbildungen und Funktionsweisen des Heizelementes und des Temperatursensors der Anschlussvorrichtung gemäß der vorliegenden Erfindung wird auf die parallelen deutschen nachveröffentlichten Patentanmeldung DE 10 2022 116 396.2 und DE 10 2022 117 015.2 der Anmelder verwiesen, deren Inhalte hiermit in den Inhalt der vorliegenden Patentanmeldung mit eingeschlossen werden, dies explizit auch zu dem Zwecke, einzelne oder mehrere Merkmale aus dieser in Bezug genommenen Patentanmeldungen in den Inhalt der der vorliegenden Patentanmeldung, auch in die Ansprüche der vorliegenden Patentanmeldung, bei Bedarf mit aufzunehmen. Soweit in diesen Anmeldungen verschiedene Varianten und Ausführungsformen und Messprinzipien einer Baueinheit beschrieben sind, die wenigstens ein Heizelement und einen Temperatursensor umfassen, können die in den in Bezug genommenen Patentanmeldungen offenbarten Merkmale auch im Zusammenhang mit der vorliegend beanspruchten Anschlussvorrichtung vorgesehen werden.

Gemäß einer vorteilhaften Ausgestaltung der Erfindung ist vorgesehen, dass der Messwert auf einer gemessenen Temperatur basiert oder eine Temperatur, insbesondere eine gemessene Temperatur oder eine Temperaturänderung, berücksichtigt. Diese Ausführungsform ermöglicht eine besonders einfache Signalverarbeitung und eine schnelle Ansprechzeit.

Gemäß einer vorteilhaften Ausgestaltung der Erfindung ist vorgesehen, dass die Anschlussvorrichtung ein Paar von Temperatursensoren umfasst. Diese Ausführungsform ermöglicht eine besonders gute Signalverarbeitung und eine einfache und präzise Messung, um festzustellen, dass eine Medienförderung eingetreten ist bzw. um zu bestimmen, welche Menge an Medium und welche Art von Medium gefördert worden ist.

Gemäß einer vorteilhaften Ausgestaltung der Erfindung ist vorgesehen, dass die beiden Temperatursensoren symmetrisch oder im Wesentlichen symmetrisch relativ zu dem Heizelement angeordnet sind. Dies ermöglicht eine besonders einfache Ausgestaltung einer Messeinrichtung und eine besonders elegante und präzise signaltechnische Verarbeitung der erlangten Messwerte.

Gemäß einer vorteilhaften Ausgestaltung der Erfindung ist vorgesehen, dass ein erster Temperatursensor stromaufwärts des Heizelementes und ein zweiter Temperatursensor stromabwärts des Heizelementes angeordnet ist. Dies ermöglicht eine besonders präzise signaltechnische Verarbeitung.

Gemäß einer vorteilhaften Ausgestaltung der Erfindung ist vorgesehen, dass mit der Messeinrichtung ein Vergleich der von den beiden Temperatursensoren ausgegebenen Werte durchführbar ist, insbesondere nach Art einer Differenzmessung, wobei mittels der Messeinrichtung aus dem Vergleich eine Information über eine vorgenommene Förderung des Mediums durch die Anschlussvorrichtung hindurch ermittelbar und an die Steuereinheit übermittelbar ist. Diese Ausführungsform ermöglicht eine besonders einfache Signalverarbeitung und Signalauswertung. Dabei kann z. B. auf herkömmliche, in anderen Technikbereichen bekannt gewordene, Verfahren zur Verarbeitung von Differenzmesswerten zurückgegriffen werden.

Gemäß einer vorteilhaften Ausgestaltung der Erfindung ist vorgesehen, dass das Heizelement und der Temperatursensor oder das Paar von Temperatursensoren zu einer Baueinheit zusammengefasst sind. Dies ermöglicht einen Rückgriff auf kommerziell erhältliche Bauteile. Darüber hinaus wird eine besonders einfache Handhabung ermöglicht.

Gemäß einer vorteilhaften Ausgestaltung der Erfindung ist vorgesehen, dass die Baueinheit einen analogen Ausgang oder eine digitale Schnittstelle für einen Signalausgang aufweist. Die Ausführungsform kann vorsehen, dass der Baueinheit analoge Signalausgänge zugeordnet sind, so dass die Steuereinheit oder eine der Steuereinheit vorgeschaltete Elektronik - oder die Messeinrichtung - eine Verarbeitung dieser analogen Messwerte vornimmt. Alternativ kann vorgesehen sein, dass die Baueinheit eine digitale Schnittstelle, z. B. eine I²C-Schnittstelle aufweist.

Die letzte Variante bedingt z. B., dass in der Baueinheit bereits eine Rechnereinheit angeordnet ist, die eine signaltechnische Verarbeitung oder Signalvorverarbeitung der erhaltenen Messwerte vornimmt. Dabei kann beispielsweise vorgesehen sein, dass in der Baueinheit bereits eine Differenzmessung oder eine Vergleichsmessung vorgenommen wird. Insbesondere kann an der Baueinheit auch die Messeinrichtung angeordnet sein.

Alternativ kann die Baueinheit auch mit einer Messeinrichtung verbunden sein.

Auch kann vorgesehen sein, dass in der Baueinheit eine Signalverarbeitung vorgenommen wird.

Gemäß einer vorteilhaften Ausgestaltung der Erfindung ist vorgesehen, dass die Baueinheit eine Rechnereinheit aufweist. Diese Ausführungsform ermöglicht eine besonders vorteilhafte Systemarchitektur, so dass die Steuereinheit von Rechenschritten entlastet werden kann und eine Vorberechnung in der Baueinheit stattfindet.

Es ist für die Erfindung unmaßgeblich, ob ausschließlich sämtliche Rechen- und Bearbeitungsschritte durch die Steuereinheit der Dosiereinrichtung durchgeführt werden, oder sämtliche Rechenschritte durch eine Rechnereinheit der Baueinheit durchgeführt werden, oder ob sich diese beiden elektronischen Bauelemente, gegebenenfalls mit zusätzlichen elektronischen Baukomponenten, die Rechenarbeit, und/oder die Signalverarbeitungsarbeit, teilen.

Gemäß einer vorteilhaften Ausgestaltung der Erfindung ist vorgesehen, dass die Rechnereinheit mit der Steuereinheit verbunden ist. Diese Ausführungsform ermöglicht, dass eine sehr effiziente Signalverarbeitung vorgenommen werden kann.

Gemäß einer vorteilhaften Ausgestaltung der Erfindung ist vorgesehen, dass eine erste Baueinheit, insbesondere zur Messung einer Fördermenge, der Anschlussvorrichtung zugeordnet ist, und dass wenigstens eine zweite Baueinheit einem Zielgerät zugeordnet ist. Diese Ausführungsform ermöglicht eine einfache Systemarchitektur zur Erzielung besonderer sicherer Dosierprozesse.

Diese Ausführungsform ermöglicht auf einfache Weise eine Bereitstellung und Gewährleistung eines proof-of-delivery = POD-Prinzips.

Gemäß einer vorteilhaften Ausgestaltung der Erfindung ist vorgesehen, dass die erste Baueinheit und die zweite Baueinheit mit der Steuereinheit der Dosiereinrichtung verbunden sind. Mit dieser Ausgestaltung der Erfindung wird eine Dosiereinrichtung bereitgestellt, mit der Dosierprozesse besonders sicher ausgestaltet sind.

Gemäß einer vorteilhaften Ausgestaltung der Erfindung ist vorgesehen, dass an die Dosiereinrichtung mehrere Zielgeräte angeschlossen sind, und jedem Zielgerät eine Baueinheit zugeordnet ist. Diese Ausführungsform trägt zur Erhöhung der Sicherheit bei Dosierprozessen bei.

Gemäß einer vorteilhaften Ausgestaltung der Erfindung ist vorgesehen, dass wenigstens eine Baueinheit zur Bereitstellung eines POD (= proof of delivery)-Signals ausgebildet ist. Hierdurch wird der Dosierprozess besonders sicher ausgestaltet. Das POD-Signal kann erfindungsgemäß von der Steuereinheit der Dosiereinrichtung verarbeitet werden und/oder von einem Steuergerät eines Zielgerätes. Insbesondere kann das POD-Signal zu Dokumentationszwecken weiterverarbeitet werden.

Gemäß einer vorteilhaften Ausgestaltung der Erfindung ist vorgesehen, dass das Heizelement und der Temperatursensor integraler Bestandteil der Anschlussvorrichtung sind und/oder fest mit der Anschlussvorrichtung verbunden sind. Diese Ausgestaltung ermöglicht eine besonders kompakte Bauweise der Anschlussvorrichtung.

Gemäß einer vorteilhaften Ausgestaltung der Erfindung ist vorgesehen, dass die Information über eine vorgenommene Förderung einen Bezug zu einer Fördermenge des Mediums aufweist. Diese Ausgestaltung ermöglicht eine Bestimmung der Fördermenge, insbesondere unter Berücksichtigung weiterer Daten, die der Steuereinheit vorliegen. So kann die Steuereinheit beispielsweise aus den Ansprechzeiten der Pumpe, z. B. aus der an sich bekannten Zahl der Umdrehungen der Pumpe zur Förderung des Mediums oder aus der an sich bekannten Einschaltdauer der Pumpe, durch vergleichende Betrachtung prüfen, ob die Pumpe ordnungsgemäß funktioniert und die vorgesehene Fördermenge gefördert hat, oder ob eine Neukalibrierung oder Rekalibrierung der Pumpe erforderlich ist.

Insbesondere kann die Steuereinheit die erhaltenen Informationen in Bezug setzen zu einer der Steuereinheit an sich bereits bekannten Art des Mediums. Beispielsweise kann eine Dosiereinrichtung, die eingangsseitig einen Anschluss mehrerer Behältnisse zulässt, zuvor manuell oder automatisch eine Information darüber erlangt haben, welches Medium sich in welchem Behältnis befindet bzw. welches Medium gerade gefördert worden ist. Erhält die Dosiereinrichtung eine Information von der Messeinrichtung, die einen Bezug zu einer Fördermenge aufweist, kann die Steuereinheit unter Berücksichtigung der ohnehin schon vorhandenen Information über die Art des Mediums z. B. die Fördermenge dieses Mediums exakt bestimmen oder kontrollieren.

Gemäß einer vorteilhaften Ausgestaltung der Erfindung ist vorgesehen, dass die Information über eine vorgenommene Förderung einen Bezug zu einer Art des geförderten Mediums aufweist. Die Dosiereinrichtung kann auf diese Weise kontrollieren oder prüfen, ob das korrekte Medium gefördert worden ist.

Gemäß einer vorteilhaften Ausgestaltung der Erfindung ist vorgesehen, dass die Steuereinheit unabhängig von der Messeinrichtung eine als zweite Information bezeichnete Medieninformation über die Art des geförderten oder zu fördernden Mediums erhält. Die Steuereinheit kann beispielsweise eine Medieninformation über das geförderte oder zu fördernde Medium von einer Bedienperson erhalten, die z. B. beim Anschluss unterschiedlicher Behältnisse an die Dosiereinrichtung eine Information an einer Schnittstelle eingibt, welches Medium an welchem Eingang der Dosiereinrichtung angeschlossen worden ist. Eine solche Informationseingabe kann freilich auch automatisiert, z. B. unter Zuhilfenahme der Anschlussvorrichtungen, erfolgen.

Der Steuereinheit liegen damit auf unterschiedlichen Wegen zu ihr gelangte Informationen über das geförderte oder zu fördernde Medium vor: Eine erste Information über das Medium hat die Steuereinheit von der Messeinrichtung erhalten. Eine zweite Information hat die Steuereinheit von einem Benutzer oder automatisch beim Anschluss der Behältnisse oder der Anschlussvorrichtungen erhalten. Diese beiden Informationen können von der Steuereinheit miteinander verglichen und verarbeitet werden.

Stellt die Steuereinheit bei einem solchen Vergleich fest, dass eine Kontrolle ergibt, dass der Dosierprozess ordnungsgemäß durchgeführt worden ist, kann dies dokumentiert werden.

Stellt die Steuereinheit bei einem Vergleich allerdings fest, dass die beiden Informationen einander widersprechen, weil nach vorliegender erster Information eine erste Medienart gefördert worden sein müsste, aber nach der Steuereinheit vorliegender zweiter Information eigentlich aufgrund eines bestimmten Anschlusses eines Behältnisses mit einem bestimmten Medium an die Steuereinheit ein anderes Medium hätte gefördert werden müssen, kann die Steuereinheit eine Fehler- oder Warnmeldung ausgeben, veranlassen oder dies in einem Dokumentationsschritt berücksichtigen.

Gemäß einer vorteilhaften Ausgestaltung der Erfindung ist vorgesehen, dass mit der Steuereinheit die Information zu der zweiten Information in Bezug setzbar ist. Mit dieser Ausführungsform kann eine Kontrolle durchgeführt werden, ob das richtige Medium gefördert worden ist.

Gemäß einer vorteilhaften Ausgestaltung der Erfindung ist vorgesehen, dass die Information über eine vorgenommene Förderung von der Steuereinheit zur Durchführung einer Bestimmung oder einer Kontrolle:
a) ob eine Präsenz von Medium in die Anschlussvorrichtung besteht, oder ob Medium in der Anschlussvorrichtung ansteht oder ob ein Leerstand besteht, und/ oder
b) ob das Medium durch die Anschlussvorrichtung gefördert wird oder wurde, und/oder
c) welches Volumen an Medium durch die Anschlussvorrichtung gefördert wird oder wurde, und/oder
d) welches Medium durch die Anschlussvorrichtung gefördert wird oder wurde, und/oder
e) ob das korrekte Medium durch die Anschlussvorrichtung gefördert wird oder wurde,
oder
zur Dokumentation von mit der Dosiereinrichtung durchgeführten Dosierprozessen, verwendbar ist.

Diese Ausgestaltung ermöglicht eine Vielzahl von Bearbeitungen der Dosiereinrichtung, die insbesondere dazu dienen, den Dosierprozess besonders sicher auszugestalten.

Eine Dokumentation von Dosierprozessen kann beispielsweise von der Steuereinheit der Dosiereinrichtung vorgenommen oder veranlasst werden, wobei die Daten der Dokumentation gegebenenfalls gespeichert oder zwischengespeichert werden, und bei Bedarf über eine externe Schnittstelle, z. B. über Internet, WLAN oder dergleichen, an eine Systemsteuerung oder an ein externes Gerät übergegeben werden. Eine Dokumentation von Dosierprozessen kann auch derart erfolgen, dass die Steuereinheit an ein Steuergerät eines Zielgerätes eine Information übergibt, dass ein Dosierprozess erfolgreich abgeschlossen worden ist und die weitere Dokumentation dann durch das Steuergerät des Zielgerätes veranlasst wird.

Gemäß einer vorteilhaften Ausgestaltung der Erfindung ist vorgesehen, dass die Information über eine vorgenommene Förderung von der Steuereinheit zur Durchführung einer Bestimmung der Funktionsfähigkeit der Pumpe oder einer Kontrolle der Funktionsfähigkeit der Pumpe oder zur Kalibrierung der Pumpe verwendbar ist. Auf diese Weise kann z. B. regelmäßig oder unregelmäßig geprüft werden, ob die Pumpe ordnungsgemäß arbeitet oder ob Alterungsprozesse der Dosiereinrichtung, z. B. ein alterungsbedingtes Verhalten der die Fluidleitung bereitstellenden Schläuche, eine Anpassung erfordern.

Gemäß einer vorteilhaften Ausgestaltung der Erfindung ist vorgesehen, dass von der Steuereinheit bei Durchführung der Bestimmung oder bei Durchführung der Kontrolle oder bei der Durchführung der Dokumentation eine Information über eine Art oder eine Fördermenge des Mediums und/oder über eine Information über eine Dichte des Mediums und/oder eine Information über eine Viskosität des Mediums und/oder über eine Temperatur des Mediums verwendbar ist. Diese Ausgestaltung ermöglicht eine besonders sichere Prozessführung.

Gemäß einer vorteilhaften Ausgestaltung der Erfindung ist vorgesehen, dass die Pumpe von einer Schlauchpumpe bereitgestellt ist. Dies ermöglicht einen Rückgriff auf herkömmliche, an sich bekannte Pumpen.

Gemäß einer vorteilhaften Ausgestaltung der Erfindung ist vorgesehen, dass ein von der Messeinrichtung erfasstes Signal einer Pulsation unterliegt, die von der Messelektronik erfassbar und datentechnisch verarbeitbar und/oder auswertbar ist. Diese Ausführungsform erkennt, dass insbesondere bei Schlauchpumpen Pulsationen im Strömungsverhalten des geförderten Fluides auftreten, wobei mittels der erfindungsgemäßen Dosiereinrichtung aufgrund der kurzen Ansprechzeiten die Pulsationen im Messsignal sichtbar gemacht werden können. Darüber hinaus erkennt diese Ausführungsform, dass die im Signal enthaltenen Pulsationen eine Aussage über die Fördermengen und/oder auch eine Aussage über die Art des geförderten Mediums erlauben.

Gemäß einer vorteilhaften Ausgestaltung der Erfindung ist vorgesehen, dass mit der Steuereinheit unter Berücksichtigung von Unterschieden in den Pulsationen des Signals bei Verwendung unterschiedlicher Medien auf die Art des geförderten Mediums schließbar ist. Dies ermöglicht eine besonders sichere und elegante Bestimmung einer Medienart oder deren Kontrolle.

Gemäß einer vorteilhaften Ausgestaltung der Erfindung ist vorgesehen, dass der Steuereinheit ein Speicher zugeordnet ist, in dem Werte, z. B. Kalibrierungswerte, Vergleichswerte oder Signalmuster, für unterschiedliche Medien und/oder für unterschiedliche Fördermengen oder Förderleistungen und/oder für Spülmedien, wie z.B. Wasser, abgelegt sind. Dies ermöglicht eine besonders sichere Signalverarbeitung und eine hohe Qualität und Präzision der Kontrolle und Bestimmung von Fördermengen.

Auch auf die in dem Speicher abgelegten Werte kann die Steuereinheit bei den vorzunehmenden Berechnungen zurückgreifen. Alternativ und/oder zusätzlich kann auch vorgesehen sein, dass die Messeinrichtung auf die in dem Speicher abgelegten Werte zurückgreifen kann.

Gemäß einer vorteilhaften Ausgestaltung der Erfindung ist vorgesehen, dass die Steuereinheit oder eine ihr zugeordnete Rechnereinheit unter Rückgriff auf den Speicher und unter Zuhilfenahme von Verfahren zur Signalverarbeitung, wie Spektralanalyse, eine Auswertung der Information vornimmt. Dies ermöglicht eine besonders präzise Bestimmung von geförderten Volumina und der exakten Bestimmung einer Medienart.

Gemäß einer vorteilhaften Ausgestaltung der Erfindung ist vorgesehen, dass wenigstens ein Medium von einem Spülmedium, insbesondere von Wasser, bereitgestellt ist. Diese Ausführungsform der erfindungsgemäßen Dosiereinrichtung berücksichtigt, dass vorteilhaft jedes Mal nach Dosierung eines Mediums eine Spülung mit einem Spülmedium erfolgt. Auch für das Spülmedium kann die Messeinrichtung erfindungsgemäß Informationen ermitteln. So können beispielsweise Volumina an Spülmedium bestimmt und kontrolliert werden. Diese Informationen können zur Kontrolle und Überprüfung der Funktionsfähigkeit der Pumpe eingesetzt werden.

Gemäß einer vorteilhaften Ausgestaltung der Erfindungen ist vorgesehen, dass das Heizelement und/oder der Temperatursensor eine Beschichtung aufweist. Diese umfasst zum Beispiel Parylene oder Polyurethan. Diese Beschichtung ermöglicht insbesondere bei Verwendung unterschiedlicher Medien eine störungsfreie Funktion der Dosiereinrichtung und eine hohe Langlebigkeit.

Gemäß einer vorteilhaften Ausgestaltung der Erfindung ist vorgesehen, dass an die Dosiereinrichtung eingangsseitig eine Mehrzahl von Behältnissen mit gleichen oder mit unterschiedlichen Medien jeweils eine Anschlussvorrichtung angeschlossen ist, wobei die Dosiereinrichtung eine Mischverteileinrichtung mit einem Stellelement aufweist, das von der Steuereinheit ansprechbar ist, und das in unterschiedlichen Stellpositionen unterschiedliche Kommunikationswege schaltet, um dem Zielgerät sukzessive unterschiedliche Medien zu zuführen. Dieses Ausführungsbeispiel ermöglicht eine Zuführung unterschiedlicher Medien sukzessive zu einem oder mehreren Zielgeräten.

Gemäß diesem Ausführungsbeispiel der Erfindung weisen die in den Behältnissen befindlichen Medien insbesondere unterschiedliche Viskositäten und/oder unterschiedliche Wärmeleitfähigkeiten auf. Bei einem Ausführungsbeispiel der Erfindung kann vorgesehen sein, dass die Messeinrichtung, insbesondere in Kooperation mit der Steuereinheit, dazu ausgebildet ist, bei der Signalverarbeitung Informationen über unterschiedliche Medien oder Informationen über unterschiedliche Viskositäten der geförderten Medien zu berücksichtigen.

Damit stellt die Erfindung einen sehr breiten Anwendungsbereich bereit, der eine sichere Bestimmung der Art des Mediums und eine sichere Bestimmung der Fördermengen, oder jeweils deren Kontrolle, über ein breites Spektrum unterschiedlicher Medien zulässt.

Gemäß einer vorteilhaften Ausgestaltung der Erfindung sind die ermittelten Informationen an eine Steuereinheit der Dosiereinrichtung übermittelbar. Dies erlaubt eine vorteilhafte Verarbeitung der erhaltenen Information.

Die Erfindung bezieht sich gemäß einem weiteren Aspekt auf eine Anschlussvorrichtung nach Anspruch 3.

Die Aufgabe der Erfindung besteht darin, eine Anschlussvorrichtung derartig weiterzubilden, dass sie eine erleichterte Handhabung zulässt.

Die Erfindung löst diese Aufgabe mit den Merkmalen des Anspruches 3.

Das Prinzip der Erfindung besteht im Wesentlichen darin, dass an der Anschlussvorrichtung ein Flowmeter angeordnet ist. Mit Hilfe des Flowmeters kann eine Information über eine vorgenommene Förderung des Mediums durch die Anschlussvorrichtung hindurch ermittelt werden. Diese Information kann an eine Steuereinheit der Dosiereinrichtung übermittelt werden.

Ein solches Flowmeter kann zum Beispiel ein Heizelement und einen Temperatursensor umfassen. Gemäß dieser Erfindung kann der Flowmeter aber auch auf andere, beliebige Weise ausgebildet sein und zum Beispiel einen Flügelradzähler oder eine andere Durchflussmesseinrichtung umfassen.

Gemäß einer weiteren vorteilhaften Ausgestaltung der Erfindung umfasst das Flowmeter wenigstens ein Heizelement und wenigstens einen mit einer Messeinrichtung verbindbaren Temperatursensor. Damit kann bei einfacher Konstruktion der Messeinrichtung eine Präsenz an Medium auf einfache Weise detektiert werden.

Gemäß einer weiteren vorteilhaften Ausgestaltung der Erfindung ist das Heizelement und/oder der Temperatursensor unmittelbar von dem Medium beaufschlagbar. Dies erlaubt eine besonders einfache Konstruktion einer erfindungsgemäßen Anschlussvorrichtung.

Gemäß einer weiteren vorteilhaften Ausgestaltung der Erfindung ist die Messeinrichtung an der Anschlussvorrichtung angeordnet und/oder an der Dosiereinrichtung angeordnet. Dies erlaubt eine besonders einfache Konstruktion einer erfindungsgemäßen Anschlussvorrichtung.

Gemäß einer weiteren vorteilhaften Ausgestaltung der Erfindung ist das Heizelement und/oder der Temperatursensor innerhalb des Aufnahmeabschnittes der Anschlussvorrichtung angeordnet. Dies erlaubt eine besonders einfache Konstruktion einer erfindungsgemäßen Anschlussvorrichtung.

Gemäß einer weiteren vorteilhaften Ausgestaltung der Erfindung ist der Aufnahmeabschnitt von dem Medium flutbar. Dies erlaubt eine besonders einfache Konstruktion einer erfindungsgemäßen Anschlussvorrichtung.

Gemäß einer weiteren vorteilhaften Ausgestaltung der Erfindung ist das Heizelement und/oder der Temperatursensor in oder an einer Wandung der Anschlussvorrichtung angeordnet. Dies erlaubt eine besonders einfache Konstruktion einer erfindungsgemäßen Anschlussvorrichtung.

Gemäß einer weiteren vorteilhaften Ausgestaltung der Erfindung ist das Heizelement und/oder der Temperatursensor mit einer Steuerung der Dosiereinrichtung verbindbar. Dies erlaubt eine besonders einfache Konstruktion einer erfindungsgemäßen Anschlussvorrichtung.

Gemäß einer weiteren vorteilhaften Ausgestaltung der Erfindung sind das Heizelement und der Temperatursensor oder mehrere Temperatursensoren zu einer Baueinheit zusammengefasst. Dies erlaubt eine besonders einfache Konstruktion einer erfindungsgemäßen Anschlussvorrichtung.

Gemäß einer weiteren vorteilhaften Ausgestaltung der Erfindung weist die Baueinheit einen analogen Ausgang oder eine digitale Schnittstelle für einen Signalausgang auf. Diese Ausführung ermöglicht eine besonders einfache Montage und Datenerfassung.

Gemäß einer weiteren vorteilhaften Ausgestaltung der Erfindung sind das Heizelement und der Temperatursensor integraler Bestandteil der Anschlussvorrichtung und/oder fest mit der Anschlussvorrichtung verbunden. Dies erlaubt eine besonders einfache Konstruktion einer erfindungsgemäßen Anschlussvorrichtung.

Gemäß einer weiteren vorteilhaften Ausgestaltung der Erfindung sind das Heizelement und/oder der Temperatursensor oder die Messelektronik mit einer Steuerung der Dosiereinrichtung oder mit einer Steuerung eines Zielgerätes verbindbar oder verbunden. Gemäß dieser Variante der Erfindung kann die Steuerung eine Auswertung eines Messergebnisses der Messelektronik vornehmen, oder einen von der Messelektronik bereitgestellten Messwert verarbeiten, insbesondere interpretieren.

Beispielsweise kann die Anschlussvorrichtung und/ oder die Dosiereinrichtung bei Feststellung, dass der Medienvorrat in dem Behältnis zur Neige geht, eine Nachbestellung von Medium veranlassen, oder ein entsprechendes Bestellsignal ausgeben.

Die erfindungsgemäße Ausgestaltung der Anschlussvorrichtung ermöglicht eine besonders präzise Bestimmung eines Leerstandes im Gebinde. Dabei kann der Umstand benutzt werden, dass die Baugröße des Bauelementes, das ein Heizelement und/ oder einen Temperatursensor umfasst, sehr klein dimensioniert gewählt werden kann und aufgrund der kleinen Abmessungen eine Positionierung des Temperatursensors sehr nahe an dem Kopfbereich des an der Anschlussvorrichtung montierten Behältnisses vorgenommen werden kann.

Insbesondere kann eine Positionierung des Temperatursensors und/ oder des Heizelementes unmittelbar stromabwärts des Kopfbereiches des Behältnisses oder unmittelbar benachbart des Kopfbereiches des Behältnisses vorgesehen werden. Insbesondere kann die Positionierung von Temperatursensor und Heizelement in dem Aufnahmeabschnitt der Anschlussvorrichtung vorgesehen sein.

Eine Detektion eines Gebindeleerstandes mit einer derartig hohen Präzision ermöglicht eine besonders frühe Erkennung einer Entleerung des Gebindes.

Gemäß einer vorteilhaften Ausgestaltung der Erfindung sind die Anschlussvorrichtung oder eine der Anschlussvorrichtung zugeordnete Halterung für das Behältnis ortsfest ausgebildet. Diese Ausführungsform ermöglicht eine besonders einfache Konstruktion und eine einfache, relative Befestigung des Behältnisses an der Anschlussvorrichtung. Die Anschlussvorrichtung kann Bestandteil der Dosiereinrichtung sein, insbesondere fest relativ zu der Dosiereinrichtung oder fest an der Dosiereinrichtung angeordnet sein. Die Anschlussvorrichtung kann aber auch gesondert von der Dosiereinrichtung aber fest relativ zu einer Bodenfläche oder Wandfläche eines Gebäuderaumes angeordnet sein.

Gemäß einer vorteilhaften Ausgestaltung der Erfindung umfasst die Anschlussvorrichtung einen Dorn zum Durchstechen einer an dem Kopfabschnitt des Behältnisses angeordneten Membran.

Die Erfindung bezieht sich gemäß einem weiteren Aspekt auf ein System nach Anspruch 14.

Der Erfindung liegt die Aufgabe zugrunde, ein System anzugeben, das eine erleichterte Durchführung von Dosierprozessen ermöglicht.

Die Erfindung löst diese Aufgabe mit den Merkmalen des Anspruches 14.

Das erfindungsgemäße System dient zur Dosierung von Medien, insbesondere von Flüssigkeiten. Als Medium im Sinne der vorliegenden Patentanmeldung werden beispielsweise Waschmittel oder Reinigungsmittel oder deren Bestandteile angesehen. Das erfindungsgemäße System umfasst wenigstens ein Behältnis zur Aufnahme des Mediums. Von der Erfindung sind auch Ausführungsbeispiele umfasst, bei denen mehrere Behältnisse mit gleichen oder unterschiedlichen Medien vorgesehen sind.

Das System umfasst darüber hinaus eine Dosiereinrichtung. Diese kann beispielsweise eine Schlauchpumpe oder eine andere geeignete Pumpe sowie insbesondere eine Steuerung umfassen. Die Dosiereinrichtung dient dazu, einem Zielgerät oder einem Zielgefäß, z. B. einer Waschmaschine oder einer Reinigungsanlage oder einer Geschirrspülmaschine oder einer Anlage zum Bereitstellen einer Reinigungslösung oder zum Bereitstellen einer Desinfektionslösung das Medium - insbesondere zu einem vorher bestimmten Zeitpunkt und in einer vorbestimmten Menge - zuzuführen. Die Steuerung der Dosiereinrichtung kann die Pumpe für einen vorbestimmten Zeitraum oder beispielsweise auch für eine vorbestimmte Zahl von Umdrehungen ansprechen, um die gewünschte Menge, oder das gewünschte Volumen an Medium, aus dem Behältnis heraus zu entnehmen, und dem Zielgefäß zuzuführen.

Die Zuführung erfolgt unter Zuhilfenahme einer Anschlussvorrichtung. Die Anschlussvorrichtung wird an einem Kopfabschnitt des Behältnisses angesetzt. Das Behältnis - welches auch als Gebinde bezeichnet wird - kann z. B. Beutel sein.

Die erfindungsgemäße Anschlussvorrichtung kann sich im montierten Zustand vollständig außerhalb des Behältnisses befinden. Sie kann einen Kopfabschnitt des Behältnisses insbesondere übergreifen oder überfassen.

Im Bereich der Anschlussvorrichtung ist ein Schlauchanschluss vorgesehen, um eine Verbindung der Fluidleitung oder der Förderleitung zu der Dosiereinrichtung bereitzustellen.

Von der Erfindung sind auch Systeme - sowie Anschlussvorrichtungen - umfasst, bei denen die Anschlussvorrichtung an mehrere Dosiereinrichtungen angeschlossen ist. Derartige Anschlussvorrichtungen dienen gemäß der Erfindung dazu, einen Anschluss an mehrere Dosiereinrichtungen zu ermöglichen, so dass zeitgleich - oder zu unterschiedlichen Zeitpunkten - mehrere Dosiereinrichtungen Zugriff auf dasselbe Behältnis haben und aus diesem das Medium zum Beispiel zu unterschiedlichen Zielgefäßen hin fördern können.

Die Erfindung bezieht sich gemäß einem weiteren Aspekt auf eine Anschlussvorrichtung nach Anspruch 15.

Dieser Erfindung liegt die Aufgabe zugrunde, eine eingangs beschriebene Anschlussvorrichtung der gattungsgemäßen Art derartig weiter zu bilden, dass sie eine verbesserte Durchführung von Dosierprozessen erlaubt.

Die Erfindung löst diese Aufgabe mit den Merkmalen des Anspruches 15.

Das erfindungsgemäße Prinzip besteht darin, dass die Anschlussvorrichtung eine Temperaturmesseinrichtung aufweist. Mit der Temperaturmesseinrichtung kann erfindungsgemäß die Temperatur eines Mediums oder eine Temperatur einer Umgebung der Anschlussvorrichtung gemessen werden, also eine Umgebung, in der sich die Anschlussvorrichtung befindet, oder in der sich das Medium befindet.

Die Information über die zu messende Temperatur wird als Temperaturinformation bezeichnet. Diese Temperaturinformation ist an die Steuereinheit der Dosiereinrichtung übermittelbar. Hierzu kann die Steuereinheit der Dosiereinrichtung beispielsweise mit der Temperaturmesseinrichtung mittelbar oder unmittelbar verbunden sein.

Die Steuereinheit der Dosiereinrichtung kann die erhaltene Temperaturinformation bei Ansteuerung der Pumpe nachfolgend berücksichtigen.

Diese Berücksichtigung kann im Zuge der Durchführung eines Dosierprozesses oder auch bei der Kalibrierung der Pumpe erfolgen. Die Erfindung erkennt, dass die Viskosität von Medien, darin enthalten auch die Viskosität von Wasser, temperaturabhängig ist. Im Zusammenhang mit der Durchführung von Dosierprozessen, zum Beispiel im Bereich des gewerblichen Spülens oder des gewerblichen Waschens, werden regelmäßig Medien eingesetzt, deren Viskosität bei steigender Temperatur zunimmt. Es sind aber zum Beispiel auch Medien bekannt, deren Viskosität mit steigender Temperatur abnimmt. Die Viskositätsunterschiede können in bestimmten Temperaturbereichen maßgeblich und für Dosierprozesse bedeutsam sein und bei Nichtberücksichtigung zu nicht ordnungsgemäßen Dosierprozessen führen.

Unterschiedliche Viskositäten führen zu unterschiedlichen Fließverhalten der Medien. Eine Förderung eines Mediums mit einer Schlauchpumpe ist zum Beispiel unproblematisch, wenn das Medium niederviskos ist, kann aber Probleme bereiten, wenn es eine höhere Viskosität einnimmt. Um auch bei unterschiedlichen Temperaturen des Mediums oder bei unterschiedlichen Umgebungstemperaturen jeweils die für den Wasch- oder Reinigungsprozess exakt erforderliche Menge an Medium dosieren zu können, kann die Steuereinheit die temperaturabhängigen Unterschiede in der Viskosität berücksichtigen und beispielsweise bei höheren Temperaturen die Pumpe über eine längere Laufzeit eine Förderung des Mediums durchführen lassen, und so die höhere Viskosität ausgleichen und im Ergebnis die geforderte und gewünschte Menge an Medium an ein Zielgefäß fördern.

Gemäß einer vorteilhaften Ausgestaltung der Erfindung sind in einem Speicher der Dosiereinrichtung, auf den die Steuereinheit zurückgreifen kann, Viskositätsinformationen abgelegt. Diese umfassen Informationen über unterschiedliche Viskositäten eines Mediums oder unterschiedlicher Medien bei unterschiedlichen Temperaturen. Hier können zum Beispiel kontinuierliche oder diskrete Werte für die Viskosität abgelegt sein. Die Ablegung dieser Viskositätsinformationen kann in Form von Algorithmen, Kurven, Tabellen etc. erfolgen.

Gemäß einer weiteren vorteilhaften Ausgestaltung der Erfindung kann die Steuereinheit die Temperaturinformationen zu den Viskositätsinformationen in Bezug setzen. Nach einem Inbezugsetzen dieser Informationen, kann die Steuereinheit bei der Durchführung eines Dosierprozesses oder bei einem Vorgang zur Kalibrierung der Pumpe die Viskositätsinformationen und die Temperaturinformationen berücksichtigen.

Bei einer vorteilhaften Ausgestaltung der Erfindung ist die Temperaturmesseinrichtung von dem Temperatursensor bereitgestellt. Hier schlägt die Erfindung zwei Fliegen mit einer Klappe: Der Temperatursensor, mit dessen Hilfe eine Information über die vorgenommene Förderung des Mediums durch die Förderleitung ermittelbar ist, kann zugleich dazu eingesetzt werden, Informationen über die Temperatur des Mediums oder der Umgebung zu erlangen, um temperaturabhängige Viskositäten des Mediums bei einem Dosierprozess berücksichtigen zu können.

Weitere Vorteile der Erfindung ergeben sich aus den nicht zitierten Unteransprüchen sowie anhand der nachfolgenden Beschreibung der in den Zeichnungen dargestellten Ausführungsbeispiele.

Darin zeigen:
- Fig. 1: Ein erstes Ausführungsbeispiel einer erfindungsgemäßen Anschlussvorrichtung und eines erfindungsgemäßen Systems in einer schematischen, blockschaltbildartigen Darstellung, wobei an die Anschlussvorrichtung ein Überkopfgebinde angeschlossen ist, wobei an der Anschlussvorrichtung gemäß einer ersten Variante der Erfindung ein Flowmeter angeordnet ist, wobei an der Anschlussvorrichtung gemäß einer weiteren Variante der Erfindung eine Temperaturmesseinrichtung und wobei an der Anschlussvorrichtung gemäß einer dritten Variante ein Präsenzsensor angeordnet ist,
- Fig. 2: das Ausführungsbeispiel der Figur 1 in einer vergrößerten, teilgeschnittenen schematischen Darstellung, etwa entlang Teilkreis II in Figur 1,
- Fig. 3: das Ausführungsbeispiel der Figur 2 in teilgeschnittener, vergrößerter, schematischer Darstellung, etwa entlang Teilkreis III in Figur 2, unter Veranschaulichung eines Heizelementes, das mit einem Temperatursensor integriert ausgebildet ist, sowie unter schematischer Darstellung einer Messschaltung,
- Fig. 4: ein weiteres Ausführungsbeispiel in einer Darstellung ähnlich Figur 3 mit zwei Temperatursensoren, und
- Fig. 5: ein weiteres Ausführungsbeispiel einer erfindungsgemäßen Anschlussvorrichtung und eines erfindungsgemäßen Systems in einer Darstellung ähnlich Figur 1, wobei an die Anschlussvorrichtung ein Gebinde ähnlich des Gebindes der Figur 1 angeschlossen ist, in das ein Saugrohr integriert ist.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Ein Ausführungsbeispiel einer erfindungsgemäßen, in ihrer Gesamtheit mit dem Bezugszeichen 10 bezeichneten Anschlussvorrichtung wird nachfolgend erläutert:

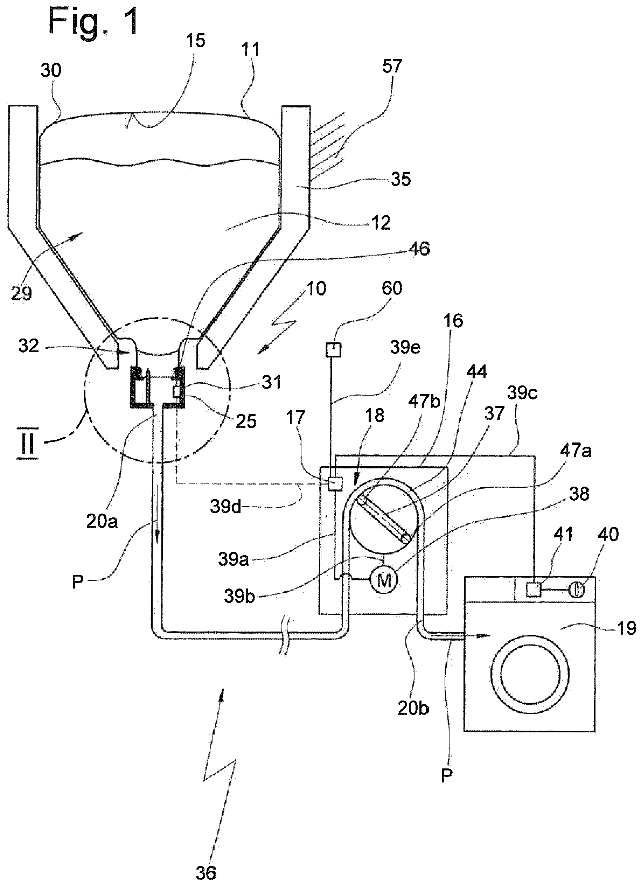

Figur 1 zeigt ein erfindungsgemäßes System 36, welches eine Dosiereinrichtung 16 umfasst. Wesentlicher Bestandteil der Dosiereinrichtung 16 sind eine Steuereinheit 17 und eine Pumpe 18. Die Steuereinheit 17 kann einen Motor 38 der zum Beispiel als Schlauchpumpe ausgebildeten Pumpe 18 über eine Signalleitung 39a ansprechen. Die Schlauchpumpe 18 umfasst zum Beispiel einen Rotor 37, der unter Zuhilfenahme von Walzen 47a, 47b einen Schlauchabschnitt 44 einer Förderleitung oder Fluidleitung 20a, 20b in herkömmlicher Weise propagierend quetschen kann.

Die Dosiereinrichtung 16 ist dazu ausgebildet, eine vorherbestimmte Menge an Medium 12 aus einem Behältnis 11 unter Zuhilfenahme der Anschlussvorrichtung 10 und einer Fluidleitung 20a zu einem Zielgerät 19 hin zu fördern. Das Zielgerät 19 kann zum Beispiel eine gewerbliche Waschmaschine oder eine gewerbliche Spülmaschine oder eine andere Reinigungsanlage sein. Das Zielgerät 19 kann über einen Programmwahlschalter 40 verfügen, der mit einer Steuerung 41 des Zielgerätes 19 verbunden ist. Über eine Signalleitung 39c kann die Steuereinheit 17 der Dosiereinrichtung 16 von dem Zielgerät 19 Anforderungssignale für eine Förderung von Medien zu einem bestimmten Zeitpunkt erhalten.

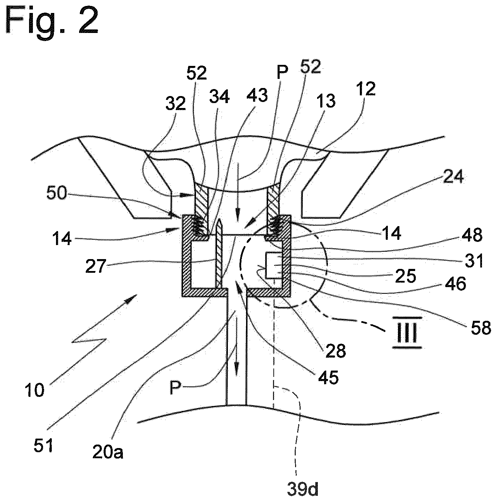

Die Anschlussvorrichtung 10 soll zunächst anhand der Figuren 1 und 2 erläutert werden:
Die Anschlussvorrichtung 10 ist bei den Ausführungsbeispielen der Figuren 1 und 2 kompakt, nach Art einer Dose ausgebildet. Diese Darstellung ist natürlich lediglich schematisch zu verstehen. Die Anschlussvorrichtung kann jede beliebige geeignete Geometrie aufweisen.

Sie umfasst gemäß Figur 2 einen Aufnahmeabschnitt 13 und einen Kupplungsabschnitt 14. Der Kupplungsabschnitt 14 ist dazu ausgebildet, mit einem Kopfabschnitt 32 des Behältnisses 11 zu kooperieren.

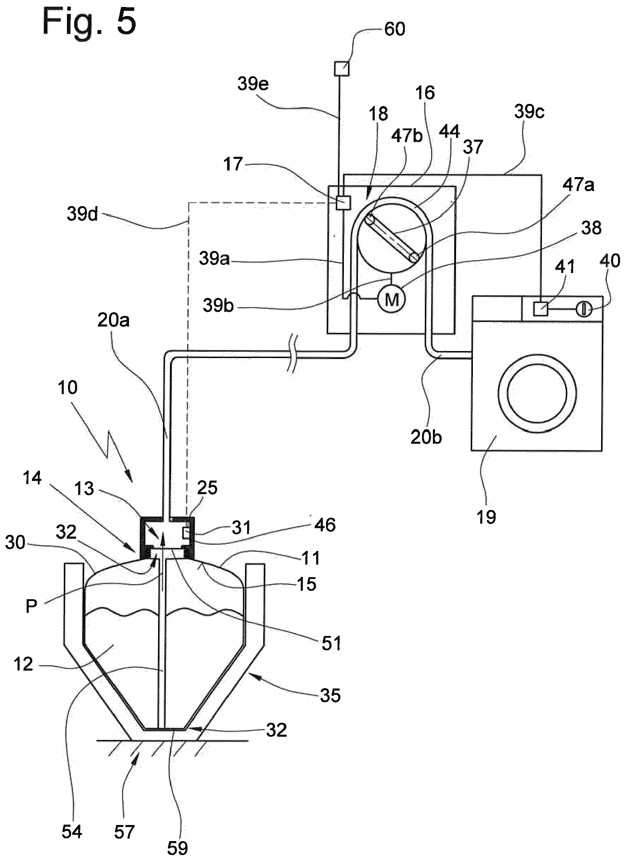

Das Behältnis 11 ist bei dem Ausführungsbeispiel der Figuren 1 und 2 - und bei dem später zu erläuternden Ausführungsbeispiel der Figur 5 - von einem flexiblen Beutel 30 bereitgestellt. Der Beutel 30 wird auch als Schlauchbeutel bezeichnet und kann insbesondere aus einer dünnen, flexiblen Folie bestehen. Der Beutel ist initial ab Werk mit Medium 12 vollständig oder nahezu vollständig befüllt. Der Beutel weist einen Kopfbereich 32 oder Kopfabschnitt 32 auf, der gemäß Figur 2 nicht flexible, insbesondere starr ausgebildete Wandungsbereiche 52 aufweisen kann. An diesen starren Wandungsbereichen 52 des Kopfbereiches 32 kann ein Außengewinde 34 ausgebildet sein. Das Behältnis 11 weist also eine Art Schraubverschluss auf. Das Behältnis 11 ist bei dem Ausführungsbeispiel der Figuren 1 und 2 von einer flexiblen Membran 51, insbesondere fluiddicht verschlossen.

Der Kupplungsabschnitt 14 der Anschlussvorrichtung 10 umfasst ebenfalls ein Gewinde 24, das zu dem Gewinde 34 des Kopfabschnittes 32 des Behältnisses 11 komplementär ist. Der Beutel 30 kann also mit seinem Kopfbereich 32 in den Kupplungsabschnitt 14 der Anschlussvorrichtung 10 hineingeschraubt werden.

Bei den Ausführungsbeispielen der Figuren 1 und 2 ist ein Dorn 27 schematisch angedeutet, der im Zuge des Einschraubens des Kopfbereiches 32 des Beutels 30 in den Kupplungsabschnitt 14 der Anschlussvorrichtung 10 die Membran 51 durchsticht, so dass Flüssigkeit, nämlich das fluide Medium 12, aus dem Behältnis 11 austreten kann.

Die Anschlussvorrichtung 10 ist bei den Ausführungsbeispielen der Figuren 1 und 2 sowie auch Figur 5 derartig ausgebildet, dass sie den Kopfbereich 32 des Behältnisses 11 ausschließlich außenseitig umschließt und einfasst. Sie dringt - mit Ausnahme des Dorns 27 - nicht in den Innenraum des Behältnisses 11 ein.

Figur 1 verdeutlicht, dass eine Halterung 35 vorgesehen ist, die zur Aufnahme und/ oder Halterung und/ oder Positionierung des flexiblen Beutels 30 dient, und zum Beispiel trichterförmig ausgebildet ist. Die Halterung 35 in Form des Trichters ist insbesondere ortsfest angeordnet. Die Halterung 35 kann fest relativ zu der Dosiereinrichtung 16 und/ oder fest relativ zu einer Boden- oder Wandfläche des Gebäudes angeordnet sein, in dem sich die Dosiereinrichtung befindet.

Insbesondere kann, was bei den Ausführungsbeispielen der Figuren nicht dargestellt ist, die Halterung 35 auch relativ zu der Anschlussvorrichtung 10 fest angeordnet sein.

Bei dem Ausführungsbeispiel der Figur 2 ist zu erkennen, dass die Anschlussvorrichtung 10 einen Aufnahmeabschnitt 13 mit einem Innenraum 45 aufweist. An diesen schließt sich, bezüglich Figur 2 nach unten hin, die Fluidleitung an, wobei diese zum Beispiel von einem Schlauch gebildet sein kann. Dieser kann über in Figur 2 nicht dargestellte Anschlussstützen oder dergleichen mit der Anschlussvorrichtung verbunden sein.

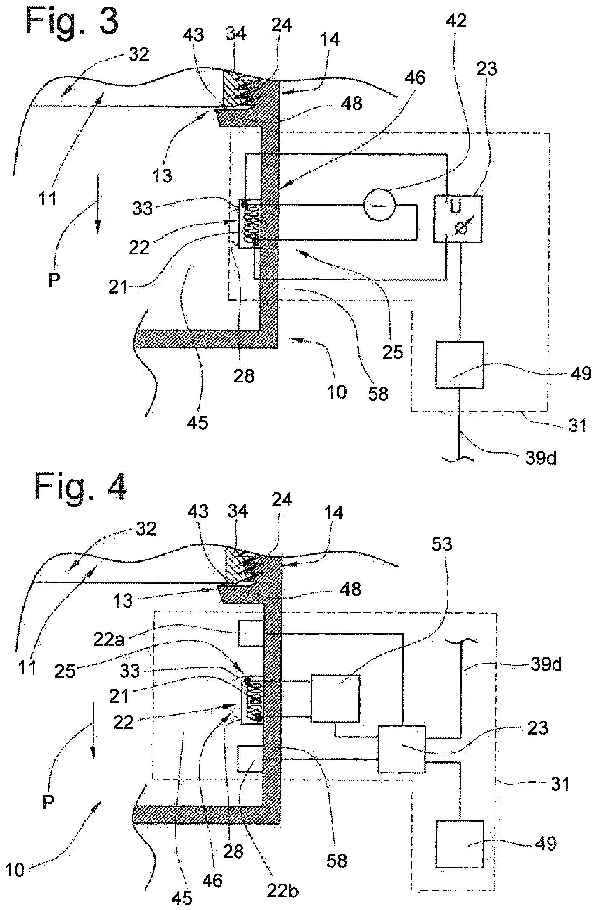

Die Anschlussvorrichtung 10 kann, wie in Figur 3 dargestellt, ein Profil 48 umfassen, das eine Anschlagfläche 43 trägt. Die Anschlagfläche 43 kann beispielsweise eine Einschraubbewegung des Kopfabschnittes 32 des Behältnisses 11 in dem Kupplungsabschnitt 14 axial begrenzen.

Der Dorn 27 kann vorteilhaft so dimensioniert sein und so lang ausgebildet sein, dass die Einschraubbewegung des Behältnisses 11 an die Anschlussvorrichtung 10 beendet ist, wenn die Membran 51 durchstochen ist und eine Fluidverbindung zwischen dem Innenraum 45 des Aufnahmeabschnittes 13 und der Anschlussvorrichtung 10 und dem Innenraum des Behältnisses 11 hergestellt und gewährleistet ist.

Die erfindungsgemäße Anschlussvorrichtung 10 kann über eine elektronische Leitung, insbesondere eine Signalleitung 39d und/ oder eine Spannungsversorgungsleitung mit der Steuereinheit 17 der Dosiereinrichtung 16 verbindbar sein. Hierzu können gegebenenfalls auch Steckverbinder oder geeignete Anschlüsse vorgesehen sein.

Der von der Pumpe 18 der Dosiereinrichtung 16 generierte Unterdruck kann zu einem Ansaugen und Fördern des Mediums 12 verwendet werden. Die Anschlussvorrichtung 10 kann einen einzigen Innenraum 45 aufweisen, wie dies Figur 2 andeutet.

Die später zu beschreibende Baueinheit 31, die ein Heizelement 21 und einen Temperatursensor 22 umfasst, kann an einer Wandung 58 der Anschlussvorrichtung 10 angeordnet sein.

Gemäß einer ersten erfindungsgemäßen Besonderheit ist an der Anschlussvorrichtung 10 gemäß Figur 1 eine Durchflussmesseinrichtung, ein sog. Flowmeter 25, angeordnet.

Figur 1 veranschaulicht einen Flowmeter 25, der im Bereich des Aufnahmeabschnittes 13 angeordnet ist und in den Innenraum 45 des Aufnahmeabschnittes 13 hineinragt.

Ein solcher Flowmeter 25 kann zum Beispiel mechanische Elemente umfassen und zum Beispiel als Flügelradzähler ausgebildet sein. Alternativ kommen Flowmeter in Betracht, die mit Schwebekörpern arbeiten, und zum Beispiel unter Zuhilfenahme optischer oder anderer Einrichtungen und Messverfahren eine Verlagerung eines Schwebekörpers in Folge einer Fluidförderung veranlassen, wobei solch eine Bewegung detektiert werden kann.

Gemäß dem Ausführungsbeispiel der Figur 3 wird deutlich, dass der Flowmeter 25 auch ein Heizelement 21 und einen Temperatursensor 22 umfassen kann. Beispielsweise können diese Elemente 21, 22 integriert ausgebildet und von einem PTC-Bauelement oder von einem NTC-Bauelement bereitgestellt sein oder ein solches Bauelement umfassen. Es handelt sich dabei um Bauelemente, die einen temperaturabhängigen Wiederstand aufweisen, wobei dieser Widerstand heizbar ist.

Gemäß Figur 3 wird das Heizelement 21 von einer Stromquelle oder einer Spannungsversorgungsquelle 42, zum Beispiel von einer Konstantstromquelle, mit Strom oder Spannung versorgt und aufgeheizt. Der über den Widerstand 21 abfallende Spannungswert kann von einer Messeinrichtung 23 gemessen werden. Die gemessene Spannung U ist ein Maß für den temperaturabhängigen Widerstand, wobei der gemessene Widerstand wiederum ein Maß für die Temperatur des Widerstandes ist. Der Widerstand bzw. das Heizelement 21 ist über eine Beaufschlagungsfläche 28 unmittelbar einem etwaig in dem Aufnahmeabschnitt 13 befindlichen Medium 12 ausgesetzt.

Wenn, veranlasst durch die Pumpe 18, eine Medienförderung durch die Anschlussvorrichtung 10 hindurch durchgeführt wird, nimmt das entlang der Baufschlagungsfläche 28 des Temperatursensors 22 strömende Medium die von dem Heizelement 21 generierte Wärme mit, sodass sich die Temperatur in unmittelbarer Umgebung des Temperatursensors 22 erniedrigt. Dies führt zu einer Änderung der Temperatur des Temperatursensors 22 und auch zu einer Änderung des von der Messeinrichtung 23 gemessenen Messwertes. Damit geht bei einem temperaturabhängigen Widerstand, wie zum Beispiel einem PTC-Element oder einem NTC-Element, auch eine Änderung des temperaturabhängigen Widerstandes einher. Aus dem Widerstand oder aus einem aus der Änderung des Widerstandes abgeleiteten Messwertes, zum Beispiel einer über den Widerstand abfallenden Spannung, ist eine Information über eine vorgenommene Förderung an Medium 12 durch die Anschlussvorrichtung 10 oder durch den Aufnahmeabschnitt 13 hindurch ermittelbar. Insbesondere aus dem Messwert des Temperatursensors 22 ist eine solche Information ermittelbar.

Auch kann durch den ermittelten Messwert eine Information erlangt werden, ob eine Beaufschlagungsfläche 28 des Temperatursensors 22 oder des Heizelementes 21 Medium 12 oder Luft ausgesetzt ist, da diese beiden Medien völlig unterschiedliche Wärmeaufnahmekapazitäten aufweisen und damit in unterschiedlichem Maße an dem Heizelement 21 generierte Wärme abzuleiten vermögen.

Eine Rechnereinheit 49 kann Bestandteil einer Baueinheit 31 sein, die das Heizelement 21 mit dem Temperatursensor 22 umfasst. Die Rechnereinheit 49 kann in der Lage sein, einen Messwert oder eine Änderung des Messwertes zu ermitteln und zu interpretieren.

Von der Erfindung ist auch umfasst, wenn aus den erhaltenen Messwerten die geförderte Fluidmenge und gegebenenfalls auch die Art des geförderten Mediums erkannt werden kann.

Die Rechnereinheit 49 kann, was Figur 3 nicht zeigt, mit der Steuereinheit 17 der Dosiereinrichtung 16 verbunden sein.

Die Messeinrichtung 23 und/oder der Rechner 49 können auch in die Dosiereinrichtung 16 integriert sein und/ oder teilweise an der Anschlussvorrichtung 10 angeordnet sein, und/ oder an einem gesonderten, nicht dargestellten Element angeordnet sein.

Das Heizelement 21 und der Temperatursensor 22, oder weitere elektronische Bauelemente, insbesondere Teile der Messeinrichtung 23 oder die gesamte Messeinrichtung 23, können zu einer Baueinheit 31 zusammengefasst sein.

Der Temperatursensor 22 und/ oder das Heizelement 21 kann mit einer Beaufschlagungsfläche 28 ausgestaltet sein, die eine Beschichtung 33 aufweisen kann. Die Beschichtung kann z. B. Polyurethan oder keramisches Material umfassen.

Das Ausführungsbeispiel der Figur 3 zeigt eine Ausgestaltung, bei der der Temperatursensor 22 und das Heizelement 21 miteinander integriert ausgebildet sind und zum Beispiel von einem PTC-Element oder NTC-Element bereitgestellt sind oder ein solches umfassen. Demgegenüber zeigt das Ausführungsbeispiel der Figur 4 eine Ausführungsform, bei der der Temperatursensor 22 und das Heizelement 21 von gesonderten Bauelementen bereitgestellt sind. Darüber hinaus ist bei dem Ausführungsbeispiel der Figur 4 ein Paar von Temperatursensoren 22a und 22b vorgesehen, die beispielsweise äquidistant zu dem Heizelement 21 angeordnet sein können. Diese Ausführungsform kann zum Beispiel mittels einer Differenzmessung der von den beiden Temperatursensoren 22a und 22b ermittelten Messwerte eine Förderung eines Fluides auf besonders einfache Weise feststellen.

Anhand der Ausführungsbeispiele der Figuren 1 bis 4 wurde ein Aspekt der Erfindung beschrieben, wonach ein Flowmeter 25 an der Anschlussvorrichtung 10 vorgesehen ist. Dieses Flowmeter 25 kann an beliebiger Stelle an der Anschlussvorrichtung 10, insbesondere im Bereich des Aufnahmeabschnittes 13, insbesondere an dessen Wandung 58, vorgesehen sein.

Ein Flowmeter 25 oder eine entsprechende Baueinheit 31 kann über eine Signalleitung 39d mit der Steuereinheit 17 der Dosiereinrichtung 16 in Verbindung stehen und zum Beispiel ein Signal an die Dosiereinrichtung 16 übermitteln. Aus dem übermittelten Signal kann zum Beispiel die Steuereinheit 17 der Dosiereinrichtung 16 eine Information ermitteln, dass eine Fluidförderung stattgefunden hat. An der Steuereinheit 17 der Dosiereinrichtung 16 kann darüber hinaus bei Bedarf auch eine weitere Signalverarbeitung erfolgen.

Von der Erfindung ist auch umfasst, wenn an der Anschlussvorrichtung 10 mehrere Flowmeter 25 vorgesehen sind.

Gemäß einem weiteren Aspekt der Erfindung können an der erfindungsgemäßen Anschlussvorrichtung 10 auch wenigstens ein Heizelement 21 und wenigstens ein Temperatursensor 22 angeordnet sein, die nicht oder nicht zwingend dazu dienen, eine Information über eine Förderung von Medium 12 durch die Anschlussvorrichtung 10 zu übermitteln, sondern die eine Füllstandsinformation oder eine Leerstandsinformation oder eine Information über eine Präsenz von Medium 12 in der Anschlussvorrichtung 10 oder eine Präsenz von Medium 12 in dem Aufnahmeabschnitt 13 bereitstellen.

Wiederum kann zur Erläuterung auf Figur 3 verwiesen werden:
Unter der Annahme, dass ein Heizelement 21 mit elektrischer Heizleistung beaufschlagt wird und über einen Temperatursensor 22, z. B. über einen intrigierten Temperatursensor 22, eine Temperatur in unmittelbarer Nähe oder Nachbarschaft des Heizelementes 21 gemessen wird, wird sich die gemessene Temperatur bei gleichbleibender Heizleistung unterscheiden, in Abhängigkeit davon, ob das Heizelement 21 von einem flüssigen Medium 12 umgeben ist, oder von Luft. Entlang eines flüssigen Mediums 12 kann Wärme erleichtert abgeführt werden, so dass sich zum Beispiel bei konstant zugeführter Heizleistung ein anderes Temperaturgleichgewicht einstellt, als wenn das Heizelement 21 von Luft umgeben wäre.

Damit kann durch Messung einer Temperatur in Nachbarschaft des Heizelementes 21, insbesondere unter Zuhilfenahme eines Temperatursensors 22, eine Information erlangt werden, ob sich benachbart des Heizelementes 21 flüssiges Medium 12 oder Luft befindet. Diese Information kann von einer Rechnereinheit 49 eines Bauelementes 31 und/oder von einer Steuereinheit 17 der Dosiereinrichtung 16 verarbeitet werden. Hieraus kann zum Beispiel die Information ermittelt werden, das sich an Medium 12 in dem Aufnahmeabschnitt 13 befindet, oder Luft.

Diese Information kann von der Baueinheit 31 unverzüglich an die Steuereinheit 17 der Dosiereinrichtung 16 übermittelt werden. Die Steuereinheit kann einen Dosierprozess - sobald sie feststellt, dass kein Medium 12 mehr an der Baueinheit 31 anliegt, sondern Luft - unterbrechen oder stoppen, oder ein Warnsignal generieren.

Damit wird so früh wie möglich verhindert, dass anstelle von Medium 12 Luft dosiert wird.

Mit der Baueinheit 31 kann festgestellt werden, ob an der Baueinheit Medium oder Luft ansteht. Von der Erfindung ist auch umfasst, wenn an der Anschlussvorrichtung 10 mehrere Baueinheiten dieser Art und oder mehrere Temperatursensoren 22 angeordnet sind, so dass innerhalb der Anschlussvorrichtung, insbesondere innerhalb des Aufnahmeabschnittes 13, unterschiedliche Füllstände festgestellt werden können.

Erst, wenn das Medium 12 in dem Aufnahmeabschnitt 13 nicht mehr an der Baueinheit 31 bzw. an dem Temperatursensor 22 oder an der Beaufschlagungsfläche 28 anliegt, wird eine Leermeldung generiert. Damit kann frühzeitig ein vollständiges Entleeren des Behältnisses 11 detektiert werden.

In den Figuren sind beispielsweise zur Veranschaulichung des bei Betrieb der Pumpe 18 strömenden Fluides oder Mediums 12 Strömungspfeile mit dem Bezugszeichen P bezeichnet.

Die Erfindung bezieht sich gemäß einem weiteren Aspekt auf eine Anschlussvorrichtung 10, an der eine Temperaturmesseinrichtung 46 vorgesehen ist. Dieses Ausführungsbeispiel wird in Figur 1 dargestellt:
Hier ist eine Temperaturmesseinrichtung 46 über eine Signalleitung 39d mit der Steuereinheit 17 der Dosiereinrichtung 16 verbunden. Die Temperaturmesseinrichtung 46 kann die Temperatur des Mediums 12 messen und diesen Temperaturmesswert an die Steuereinheit 17 übermitteln. Die Steuereinheit 17 kann mit einem Speicher 60 zusammenwirken. In dem Speicher 60 können für ein oder mehrere Medien 12 Werte für die Viskosität in Abhängigkeit unterschiedlicher Temperaturen abgelegt sein. Auf diese Viskositätinformationen kann die Steuereinheit 17 der Dosiereinrichtung 16 im Rahmen eines Dosierprozesses - oder bei einer Kalibrierung der Pumpe 18 - zurückgreifen.

Von der Erfindung ist auch umfasst, wenn die Temperaturmesseinrichtung 46 von dem Temperatursensor 22 des Flowmeters 25 oder der Einrichtung zu Feststellung einer Präsenz von Medium 12 in dem Aufnahmeabschnitt 13 bereitgestellt ist.

Bei dieser Variante kann der von einem Temperatursensor 22 einer Baueinheit 31 ermittelte Temperaturwert auch zur Optimierung eines Dosierprozesses im Sinne einer exakten Ansteuerung der Pumpe 18 unter Berücksichtigung von Viskositätsinformationen genutzt werden, ohne dass eine gesonderte Temperaturmesseinrichtung 46 vorgesehen werden muss.

Von der Erfindung ist weiter umfasst, wenn ein zuvor beschriebener Flowmeter 25 alternativ oder zusätzlich als Präsenzsensor eingesetzt wird. Bei dieser Variante kann zum Beispiel ein Flowmeter 25 im Bereich der Anschlussvorrichtung 10 angeordnet sein, und eine Information über eine Förderung des Mediums 12 generieren und zugleich - bei vollständiger Entleerung - eine Leerstandsmeldung des Gebindes generieren.

Bei dem Ausführungsbeispiel der Figur 3 ist eine Heizungssteuerung 53 vorgesehen. Die Heizungssteuerung 53 kann das Heizelement 21 des Ausführungsbeispiels der Figur 3 zum Beispiel mit konstanter oder variabler Heizleistung ansteuern.

Figur 5 zeigt ein weiteres Ausführungsbeispiel einer erfindungsgemäßen Anschlussvorrichtung 10:
Wiederum ist an der Anschlussvorrichtung 10 bei dem Ausführungsbeispiel der Figur 5 ein Flowmeter 25 angeordnet, das über eine Signal- oder Steuerleitung 39d mit einer Steuereinheit 17 der Dosiereinrichtung 16 verbindbar ist. Der Flowmeter 25 ist so, wie bei den Ausführungsbeispielen der Figur 1 bis 4 beschrieben, ausgebildet und ermöglicht eine Ermittlung einer Information über eine Förderung von Medium 12 durch die Anschlussvorrichtung 10 oder eine Ermittlung einer Information über eine Präsenz von Medium 12 in der Anschlussvorrichtung 10 hindurch. Das Ausführungsbeispiel der Figur 5 entspricht dem Ausführungsbeispiel der Figur 1 mit dem Unterschied, das anstelle eines als Überkopfgebinde ausgebildeten Behältnisses 11 gemäß Figur 1, ein Behältnis gemäß Figur 5 eingesetzt wird, das sich wie folgt beschrieben lässt:
Das Behältnis 11 ist von einem flexiblen Beutel 30 bereitgestellt, der einen Kopfabschnitt 32 aufweist. In dem Beutel 30 ist ein Saugrohr 54 fest angeordnet und reicht bis zum Boden 59 des Behältnisses 11. Das Saugrohr 54 endet im Kopfbereich 32 des Behältnisses 11. Wiederum ist eine Anschlussvorrichtung 10 vorgesehen, die über einen Kupplungsabschnitt 14 verfügt, mit dem sie mit dem Kopfbereich 32 des Behältnisses 11 mechanisch, insbesondere auch fluiddicht verbindbar ist. Die Anschlussvorrichtung 10 umfasst wiederum einen Aufnahmeabschnitt 13. Dieser geht eine fluiddichte Verbindung mit dem Saugrohr 54 ein, wenn die Anschlussvorrichtung 10 und der Kopfabschnitt 32 des Behältnisses 11 miteinander verbunden sind.

Das Behältnis 11 kann eine Membran 51 aufweisen. Ein Dorn 27, wie bei dem Ausführungsbeispiel der Figur 1, ist hier aber nicht erforderlich, da die Membran 51 auch auf andere Weise geöffnet werden kann.

Von der Erfindung sind schließlich auch noch weitere Ausführungsformen umfasst, bei denen zwar ein Überkopfgebinde mit einem Behältnis 11 gemäß Figur 1 eingesetzt wird, ein Dorn 27 aber nicht erforderlich ist. Zum Beispiel kann vorgesehen sein, dass die Bewerkstelligung der Verbindung zwischen Anschlussvorrichtung 10 und Kopfbereich 32 des Behältnisses 11 aneinander in einer Position des Behältnisses 11 gemäß Figur 5 erfolgt, und erst danach das Behältnis 11 auf den Kopf gestellt wird.

Bei dem Ausführungsbeispiel der Figur 5 ist ebenfalls eine Halterung 35 vorgesehen, die an einer Befestigungsstelle 57 ortsfest angeordnet sein kann.

Wiederum kann die Halterung 35 die Form eines Trichters einnehmen, zum Beispiel um zu gewährleisten, dass eine Entnahme von Medium 12 aus dem Behältnis 11 bis zur Restentleerung über das Saugrohr 54 möglich ist.

Bei anderen nicht dargestellten Ausführungsformen kann der flexible Beutel 30 auch ohne Verwendung eines Trichters festgelegt werden, zum Beispiel über eine nicht dargestellte Aufhängevorrichtung.

## Patentansprüche

1. Anschlussvorrichtung (10) zur Bewerkstelligung einer lösbaren, mechanischen, insbesondere fluiddichten Verbindung einer Dosiereinrichtung (16) mit einem Kopfbereich (32) eines ein zu dosierendes Medium (12) aufweisenden Behältnisses (11), das insbesondere nach Art eines Überkopfgebindes (29) ausgebildet ist, und das insbesondere von einem flexiblen Beutel (30) bereitgestellt ist, wobei die Anschlussvorrichtung (10) einen Aufnahmeabschnitt (13) zur Aufnahme des Mediums (12) umfasst, der im verbundenen Zustand von Behältnis (11) und Anschlussvorrichtung (10) unmittelbar stromabwärts des Kopfbereiches (32) des Behältnisses (11) oder unmittelbar benachbart des Kopfbereiches (32) des Behältnisses (11) angeordnet ist, **dadurch gekennzeichnet, dass** an der Anschlussvorrichtung (10) wenigstens ein Heizelement (21) und wenigstens ein mit einer Messeinrichtung (23) verbindbarer oder verbundener Temperatursensor (22) angeordnet ist, wobei mittels der Messeinrichtung (23) unter Zuhilfenahme eines von dem Temperatursensor (22) ausgegebenen Messwertes
i) eine Information über eine vorgenommene Förderung des Mediums (12) durch die Anschlussvorrichtung (10) hindurch ermittelbar ist und/ oder
ii) eine Information über eine Präsenz an Medium (12) in dem Aufnahmeabschnitt (32) ermittelbar ist.

2. Anschlussvorrichtung (10) nach Anspruch 1, **dadurch gekennzeichnet, dass** die ermittelten Informationen an eine Steuereinheit (17) der Dosiereinrichtung (16) übermittelbar sind.

3. Anschlussvorrichtung (10) zur Bewerkstelligung einer lösbaren, mechanischen, insbesondere fluiddichten Verbindung einer Dosiereinrichtung (16) mit einem Kopfbereich (32) eines ein zu dosierendes Medium (12) aufweisenden Behältnis (11), das insbesondere nach Art eines Überkopfgebindes (29) ausgebildet ist, und das insbesondere von einem flexiblen Beutel (30) bereitgestellt ist, wobei die Anschlussvorrichtung (10) einen Aufnahmeabschnitt (13) zur Aufnahme des Mediums (12) umfasst, der im verbundenen Zustand von Behältnis (11) und Anschlussvorrichtung (10) unmittelbar stromabwärts des Kopfbereiches (32) des Behältnisses (11) oder unmittelbar benachbart des Kopfbereiches (32) des Behältnisses (11) angeordnet ist, **dadurch gekennzeichnet, dass** an der Anschlussvorrichtung (10) wenigstens ein Flowmeter (25) angeordnet ist, mit dem eine Information über eine vorgenommene Förderung des Mediums (12) durch die Anschlussvorrichtung (10) hindurch ermittelbar und insbesondere an eine Steuereinheit (17) der Dosiereinrichtung (16) übermittelbar ist.

4. Anschlussvorrichtung nach Anspruch 3, **dadurch gekennzeichnet, dass** das Flowmeter (25) wenigstens ein Heizelement (21) und wenigstens einen mit einer Messeinrichtung (23) verbindbaren oder verbundenen Temperatursensor (22) umfasst.

5. Anschlussvorrichtung (10) nach Anspruch 1 oder nach Anspruch 4, **dadurch gekennzeichnet, dass** die Anschlussvorrichtung (10) und/ oder eine der Anschlussvorrichtung (10) zugeordnete Halterung (35) für das Behältnis (11) ortsfest ausgebildet sind.

6. Anschlussvorrichtung nach Anspruch 1 oder nach Anspruch 4, **dadurch gekennzeichnet, dass** das Heizelement (21) und/oder der Temperatursensor (22) unmittelbar von dem Medium (12) beaufschlagbar ist.

7. Anschlussvorrichtung nach Anspruch 1 oder nach Anspruch 4, **dadurch gekennzeichnet, dass** die Messeinrichtung (23) an der Anschlussvorrichtung (10) oder an der Dosiereinrichtung (16) angeordnet ist.

8. Anschlussvorrichtung nach Anspruch 1 oder nach Anspruch 4, **dadurch gekennzeichnet, dass** das Heizelement (21) und/oder der Temperatursensor (22) an einer Wandung (45) des Aufnahmeabschnittes (13) angeordnet ist.

9. Anschlussvorrichtung (10) nach Anspruch 8, **dadurch gekennzeichnet, dass** die Anschlussvorrichtung (10) einen Kupplungsabschnitt (50) zur lösbaren mechanischen Verbindung mit dem Kopfbereich (32) des Behältnisses (11) umfasst.

10. Anschlussvorrichtung (10) nach Anspruch 9, **dadurch gekennzeichnet, dass** der Kupplungsabschnitt (50) ein Gewinde (24) umfasst, das insbesondere mit einem Gegengewinde (34) am Kopfabschnitt (32) des Behältnisses (11) in Eingriff bringbar ist.

11. Anschlussvorrichtung (10) nach Anspruch 1 oder nach Anspruch 4, **dadurch gekennzeichnet, dass** das Heizelement (21) und/oder der Temperatursensor (22) mit einer Steuerung (17) der Dosiereinrichtung (16) verbindbar ist.

12. Anschlussvorrichtung (10) nach Anspruch 1 oder nach Anspruch 4, **dadurch gekennzeichnet, dass** das Heizelement (21) und der Temperatursensor (22) oder mehrere Temperatursensoren (22a, 22b) zu einer Baueinheit (31, 31a, 31b) zusammengefasst sind.

13. Anschlussvorrichtung (10) nach Anspruch 12, **dadurch gekennzeichnet, dass** die Baueinheit (31, 31a, 31b) einen analogen Ausgang oder eine digitale Schnittstelle für einen Signalausgang aufweist.

14. System (36), umfassend eine Dosiereinrichtung (16) zur Dosierung von Medien (12), umfassend wenigstens ein Behältnis (11) zur Aufnahme eines Mediums (12), eine von einer Steuereinheit (17) der Dosiereinrichtung (16) ansprechbare Pumpe (18), und ein Zielgerät (19), wobei das Medium (12) unter Zuhilfenahme einer Anschlussvorrichtung (10), insbesondere einer Anschlussvorrichtung nach einem der Ansprüche 1 bis 13, die an das Behältnis (11) heransetzbar ist oder an die das Behältnis heransetzbar ist, durch Betätigung der Pumpe (18) aus dem Behältnis (11) entnehmbar und dem Zielgerät (19) zuführbar ist, **dadurch gekennzeichnet, dass** an der Anschlussvorrichtung (10), wenigstens ein Heizelement (21) und wenigstens ein mit einer Messeinrichtung (23) verbindbarer oder verbundener Temperatursensor (22) angeordnet ist, wobei mittels der Messeinrichtung (23) unter Zuhilfenahme eines von dem Temperatursensor (21) ausgegebenen Messwertes
i) eine Information über eine vorgenommene Förderung des Mediums (12) durch die Anschlussvorrichtung (10) hindurch ermittelbar und an eine Steuereinheit (22) der Dosiereinrichtung (16) übermittelbar ist, und/ oder
ii) eine Information über eine Präsenz an Medium (12) in dem Behältnis (11) ermittelbar und an eine Steuereinheit (17) der Dosiereinrichtung (16) übermittelbar ist.

15. Anschlussvorrichtung (10) nach dem Oberbegriff des Anspruches 1, **dadurch gekennzeichnet, dass** die Anschlussvorrichtung (10) eine Temperaturmesseinrichtung (46) aufweist, mit der eine Temperatur wenigstens eines Mediums (12) oder eine Temperatur einer Umgebung der Anschlussvorrichtung (10) messbar ist, wobei eine Temperaturinformation über die gemessene Temperatur an die Steuereinheit (17) der Dosiereinrichtung (16) übermittelbar ist, und wobei die Steuereinheit (17) insbesondere dazu ausgebildet ist, die erhaltene Temperaturinformation bei Ansteuerung der Pumpe (18) zur Durchführung eines Dosierprozesses oder bei einer Kalibrierung der Pumpe (18) zu berücksichtigen.
